(19) Europäisches Patentamt / European Patent Office / Office européen des brevets

(11) EP 4 361 049 A2

(12) # EUROPEAN PATENT APPLICATION

(43) Date of publication:
**01.05.2024 Bulletin 2024/18**

(21) Application number: **23206112.7**

(22) Date of filing: **26.10.2023**

(51) International Patent Classification (IPC):
***B65B 9/04*** *(2006.01)* ***B65B 39/14*** *(2006.01)*
***B65B 41/16*** *(2006.01)* ***B65B 47/02*** *(2006.01)*
***B65B 47/10*** *(2006.01)* ***B65B 61/02*** *(2006.01)*
***B65B 61/06*** *(2006.01)*

(52) Cooperative Patent Classification (CPC):
**B65B 9/042; B65B 9/045; B65B 39/14; B65B 41/16; B65B 47/02; B65B 47/10; B65B 61/02; B65B 61/025; B65B 61/06;** B65B 2009/047; B65B 2220/14; B65B 2220/22

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **28.10.2022 US 202217975747**

(71) Applicant: **The Procter & Gamble Company
Cincinnati, OH 45202 (US)**

(72) Inventors:
- **BRANDT SANZ, Miguel
1853 Strombeek-Bever (BE)**
- **DONNE, Kristof Bert
1853 Stormbeek Bever, Brussels (BE)**

(74) Representative: **P&G Patent Belgium UK
N.V. Procter & Gamble Services Company S.A.
Temselaan 100
1853 Strombeek-Bever (BE)**

(54) **PROCESS OF MAKING WATER -SOLUBLE UNIT DOSE ARTICLES**

(57) A process of making water soluble unit dose articles using water-soluble films is disclosed. The process includes obtaining a first film roll to provide a first film web to a forming surface and obtaining a second film roll to provide a second film web to the forming surface. The first film web and second film web are tensioned to induce strains thereon. The first film web is conformed to one or more recesses in the forming surface forming one or more cavities in the first film web. The one or more cavities are filled with one or more treatment agents. The second film web is joined to the first film web.

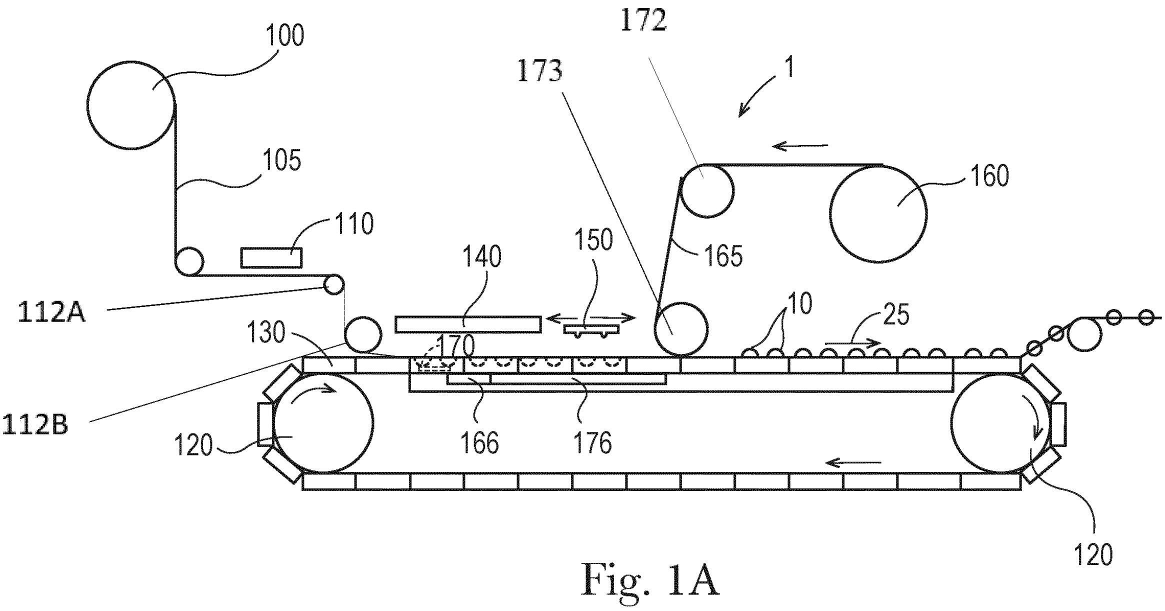


Fig. 1A



Processed by Luminess, 75001 PARIS (FR)

## Description

FIELD OF THE INVENTION

Process for making water soluble unit dose articles containing one or more treatment agents.

BACKGROUND OF THE INVENTION

Water soluble pouches for delivering substrate treatment agents, such as dishwashing detergents, laundry detergents, surface cleaning compositions, and laundry treatment compositions, are increasing in popularity globally. Typically, the consumer places the pouch in a compartment in the dishwashing machine or in the drum of a clothing washing machine or bucket of water, the pouch is exposed to water, and the pouch dissolves and releases the treatment agent.

The treatment agent can be a solid or liquid or a combination of solid and liquid. For example, some commercially available pouches have multiple compartments with liquid in each. Some commercially available pouches have multiple compartments with one compartment containing a solid and another compartment containing a liquid. Individual compartments of multi-compartment pouches can have different dissolution rates, thereby providing for delivery of the substrate treatment agents within individual compartments at different times during the cycle of the wash.

These pouches are typically formed of a plurality of layers of water-soluble film which are joined together thereby encapsulating the treatment agent. Sealing of the layers to one another such that the treatment agent does not prematurely escape the confines of the pouch can be difficult to accommodate, particularly when the pouches comprise liquid. Additionally, in order to provide consumer acceptable dissolution rates, often thinner water-soluble films are utilized. Unfortunately, thinner film can be more prone to wrinkling during processing than their thicker film counterparts. These wrinkles not only can lead to unattractive looking pouches but also can increase the likelihood of failure particularly at the seals between the two film layers.

Based on the foregoing, there is a need for a process which can reduce the likelihood of wrinkles of the water-soluble film during processing to make water-soluble unit dose articles. Such process should be able to accommodate thin films which have consumer acceptable dissolution rates.

SUMMARY OF INVENTION

The processes of the present disclosure can reduce the likelihood of wrinkles in the film webs being processed. Additionally, the processes of the present disclosure provide water-soluble unit dose articles having a consumer acceptable dissolution rates. In one example, a process of the present disclosure comprises the steps of: (i) obtaining a first water-soluble film roll and unwinding the first water-soluble film roll to provide a first film web to a first forming surface, the first forming surface comprising a plurality of first molds each comprising one or more recesses therein, and wherein the first forming surface has a first velocity; (ii) tensioning the first film web and inducing a first strain therein and providing the first film web to the first forming surface; (iii) conforming the first film web to the one or more recesses thereby forming one or more cavities in the first film web; (iv) filling the one or more cavities in the first film web with one or more treatment agents; (v) obtaining a second water-soluble film roll and unwinding the second water-soluble film roll to provide a second film web; (vi) tensioning the second film web and inducing a second strain therein, wherein the second strain is greater than the first strain; (vii) providing the second film web to the first forming surface and joining the second film web to the first film web thereby sealing the one or more cavities along peripheries thereof; and (viii) cutting joined first and second film webs along one or more of the peripheries to create a plurality of water-soluble unit dose articles.

In another example, a process of the present disclosure comprises the steps of: (i) obtaining a first water-soluble film roll and unwinding the first water-soluble film roll to provide a first film web to a first forming surface, the first forming surface comprising a plurality of first molds each comprising one or more recesses therein, and wherein the first forming surface has a first velocity; (ii) tensioning the first film and inducing a first strain therein and providing the first film web to a first forming surface; (iii) conforming the first film web to the one or more recesses thereby forming one or more cavities in the first film web; (iv) filling the one or more cavities in the strained first film web with one or more treatment agents; (v) obtaining a second water-soluble film roll and unwinding the second water-soluble film roll to provide a second film web; (vi) tensioning the second film web and inducing a second strain therein, wherein the second strain is greater than the first strain; (vii) obtaining a third water-soluble film roll and unwinding the third water-soluble film roll to provide a third film web; (viii) tensioning the third film web and inducing a third strain therein, and providing the third film web to a second forming surface having the first velocity, the second forming surface comprising a plurality of second molds with one or more recesses therein, and wherein the third strain is greater than the first strain; (ix) conforming the third film web to the one or more recesses in the plurality of second molds thereby forming one or more cavities in the third film web; (x) filling the one or more cavities in the third film web with one or more treatment agents; (xi) providing

the second film web to the second forming surface and joining the second film web to the third film web thereby sealing the one or more cavities in the third film web; (xii) joining the first film web to the second film web such that the second film web is disposed between the first film web and the third film web thereby sealing the one or more cavities in the first film web and forming a combined film web; and (xiii) cutting the combined film web along one or more of the peripheries to create a plurality of water-soluble unit dose articles.

BRIEF DESCRIPTION OF THE DRAWINGS

FIG. 1A is a representative schematic showing a portion of an apparatus for making unit dose articles in accordance with the present disclosure.
FIG. 1B is a representative schematic showing a film web over a plurality of molds.
FIG. 1C is a representative schematic showing a cross section of a mold of the plurality of molds.
FIG. 2A is a schematic representation showing a combined film web on the plurality of molds.
FIG. 2B is a schematic representation showing the combined film web of FIG. 2A with the plurality of molds removed for ease of visualization.
FIG. 2C is a schematic representation showing a plurality of unit dose articles each in accordance with the present disclosure.
FIG. 3 is a representative schematic showing a portion of another apparatus for making unit dose articles in accordance with the present disclosure.
FIG. 4 is a schematic representation of a unit dose article constructed in accordance with the present disclosure.

DETAILED DESCRIPTION OF THE INVENTION

The processes of the present disclosure can accommodate the utilization of water-soluble films while reducing the likelihood of wrinkles being formed in the film during processing. Additionally, the processes of the present disclosure can accommodate water-soluble films having a consumer acceptable dissolution rate.

The processes of the present disclosure can be utilized to create a myriad of water-soluble unit dose articles. For example, unit dose articles of the present disclosure may comprise more than one chamber, at least two chambers, or at least three chambers, or at least four chambers, or even at least five chambers. The chambers may be arranged in superposed orientation, i.e. one positioned on top of the other. Alternatively, the chambers may be positioned in a side-by-side orientation, i.e. one orientated next to the other. The chambers may be orientated in a 'tyre and rim' arrangement, i.e. a first chamber is positioned next to a second chamber, but the first chamber at least partially surrounds the second chamber, but does not completely enclose the second chamber. Alternatively, one or more chambers may be completely enclosed within another chamber. In some examples, unit dose articles may comprise at least two chambers, one of the chambers being smaller than the other chamber. In some examples, unit dose articles comprise at least three chambers wherein two of the chambers may be smaller than the third chamber, and in some examples the smaller chambers are superposed on the larger chamber. The superposed chambers are in some examples orientated side-by-side.

The unit dose articles of the present disclosure can be of the type presently marketed as TIDE PODS™, CASCADE ACTION PACS™,CASCADE PLATINUM™, CASCADE COMPLETE™, ARIEL 3 IN 1 PODS™, TIDE BOOST ORIGINAL DUO PACs™, TIDE BOOST FEBREZE SPORT DUO PACS™, TIDE BOOST FEE DUO PACS™, TIDE BOOSE VIVID WHITE BRIGHT PACS™, DASH™, FAIRY™ (PLATINUM™, ALL-IN ONE™, YES™ (PLATINUM ALL-IN ONE™,JAR (PLATINUM™, ALL-IN ONE™,DREFT™ (PLATINUM™, ALL-IN ONE™) by The Procter & Gamble Company in various geographies globally.

A converter is utilized to form the unit dose articles of the present disclosure. The converter can be configured in a variety of different manners depending on the type of unit dose articles desired. Converters in accordance with the present disclosure can comprise one or more forming surfaces. The one or more forming surfaces may comprise a plurality of molds that are transported through the process via a drum conveyor, a horizontal conveyor, or a combination of the two. For example, processes of the present disclosure may comprise a first forming surface comprising a form conveyor which translates molds through at least a portion of the processes described herein. The form conveyor, as described in additional detail herein, may comprise a horizontal conveyor.

The processes of the present disclosure can be performed as intermittent processes or continuous processes. Preferably, the processes of the present disclosure are continuous.

As an initial step, rolls of water-soluble film are obtained. For those manufacturers of water-soluble films, the steps discussed below may be performed post-production of the water-soluble film. For those manufacturers that utilize water-soluble film to form unit dose articles, the water-soluble films may be purchased from suitable water-soluble film

manufacturers.

For the processes of the present disclosure, a first roll of water-soluble film may be unwound and supply a first film web to the converter and be utilized as a formed film, i.e. the film in which one or more cavities will be formed. A second roll of water-soluble film may be unwound and supply a second film web to the converter and be utilized as a cover film, i.e. the film utilized to cover the one or more cavities in the formed film.

The converter may comprise a first forming surface comprising a plurality of first molds. Each of the plurality of first molds comprises one or more recesses therein. The first film web may be provided to the first forming surface.

To control wrinkling within the first film web, one or more rolls (at least one of which is a driven roll) may be provided between the first roll of water-soluble film and the first forming surface. The one or more rolls may drive the first film web onto the first forming surface and may be configured to place the first film web into tension. This can be achieved for example by having a velocity difference between adjacent rolls, between the form conveyor and the one or more rolls or between roll of water-soluble film and the driven roll of the one or more rolls. In the case of adjacent rolls, one or more rolls may be configured in an S-wrap configuration. In such configurations, one of the rolls in the S-wrap configuration may have a higher velocity than its adjacent roll thereby placing the first film web in tension and causing strain in the first film web. Alternatively, one of the rolls in the S-wrap may have a lower velocity than the first forming surface ("first velocity") thereby placing the first film web in tension. The one or more rolls may be heated.

Strain applied to a film web can reduce the likelihood of sagging of the web, slack in the web and/or mistracking of the web. Strain can also be utilized, as discovered by the inventors, to reduce the likelihood of wrinkles being formed within the film web. Unfortunately, there is a delicate balance regarding the level of strain that can be imposed to the film web. The strain applied should be enough to reduce the likelihood of the above problems. But too much strain can cause thinning of the film. Too much imparted strain can cause the film to weaken to such an extent that an increased likelihood of premature failure either during manufacture, packaging or shipping occurs. Additionally, inducing strain to a film web can cause the web to neck (lose a percentage of its cross machine directional width). Particularly where the first forming surface comprises a vacuum source, too much necking of the first film web can cause longitudinal edges of the web to move inboard of one or more of the cavities in the mold. This can cause the loss of vacuum for the entire first forming surface which would cause a process shutdown. Also, too much applied strain to the web can also lead to one of the problems for which strain was being imparted in the first place, i.e. wrinkles. Accordingly, care should be taken to ensure that a sufficient strain is applied to reduce the likelihood of wrinkles while also minimizing the risk of premature failure and/or inducement of wrinkles.

The strain of the film webs described herein may be dependent upon the configuration of the converter. Depending on the configuration of the converter, the applied strain may vary from one device to the next. However, in order to control wrinkles in the film web, the strain described herein is relevant to the film web just prior to being applied to the forming surface.

The applied strain may be obtained by measuring the stress at the span of interest and using the film web's stress - strain curve. The equation for determining applied stress is:

$$\sigma = \frac{F}{A_0}$$

where $\sigma$ is the stress, $A_0$ is the cross-sectional area of the film web and F is the force applied to the film web. The force applied to the film web can be measured with load cells which can be installed on a roll. Load cells for both idler rolls and driven rolls are well known in the art. Any suitable load cell for the process described herein may be utilized.

It is worth noting that the applied strain may similarly be calculated based upon the configuration of the converter. For example, account may be taken of the roll velocities, web accumulator settings, etc. Furthering this example, the film web strain at an infeed to the forming surface (conveyor or drum) can be calculated from the tension at a first metering point in the film web path and the relative speeds of the first metering point and the forming surface. The first metering point is the first driven element (excluding unwinder for the rolls of film) that imparts speed to the film web. As noted herein, this can be achieved via one or more rolls, e.g. an S-wrap (with sufficient wrap angle to reduce the likelihood of slippage), an omega roll, a nip roll, or the like. The strain at the metering point can be calculated using:

$$\epsilon_1 = \frac{\sigma_1}{E}$$

where E is the elastic modulus, where $\sigma$ is the stress and $\varepsilon$ is the strain. The strain at the forming surface can be determined by:

$$\varepsilon_f = \varepsilon_1 + \left(\frac{V_f}{V_1} - 1\right)$$

where $V_f$ is the surface speed of the forming surface and $V_1$ is the surface speed of the metering point.

The strain applied to the first film web ("first strain") can be greater than or equal to about 1 percent and equal to or less than about 7 percent. For example, the first strain can be from between about 1 percent to about 7 percent, more preferably from about 1.5 percent to about 6 percent, or most preferably from about 2 percent to about 5 percent, specifically reciting all values within these ranges and any ranges created thereby.

As noted, the one or more rolls can drive the first film web to the forming surface with a strain induced thereon. The first film web may then be conformed to the plurality of first molds.

Conforming of the first film web to the one or more recesses in the plurality of first molds may be via thermoforming, vacuum forming, or any combination thereof. Thermoforming involves heating of a film web and deformation of the film web. The deformation may occur during heating and/or shortly thereafter, e.g. within a few seconds of heating. Vacuum forming involves the application of a negative pressure to pull the film web into the one or more recesses - typically in the absence of an application of heat to the film web. The deformation of the first film web may utilize vacuum pressure and/or a positive pressure to push the film web into the one or more recesses. As an example, thermoforming may involve heating the film web and applying either a negative and/or positive pressure to conform the film web to the one or more recesses. Heating of the film webs of the present disclosure can be accommodated via heated rollers, IR emitters, hot plates or combinations thereof.

After deformation, the first film web comprises one or more cavities corresponding to the one or more recesses in the plurality of first molds. The first film web may then be translated to a dispenser. The dispenser can provide one or more treatment agents to the one or more cavities in the first film web.

The second film web may be provided to the first forming surface and joined to the first film web. The joined first and second film webs comprise the one or more treatment agents therebetween. The second film web may be joined to the first film web thereby sealing the one or more cavities along peripheries thereof, thereby forming one or more unit dose articles. The joined first and second film webs may then be cut along one or more of the peripheries of the unit dose articles thereby creating discrete unit dose articles having one chamber or a plurality of chambers.

Similar to the first film web, strain can be imposed on the second film web as well using the same or different techniques described for imparting strain to the first film web, e.g. velocity difference between a driven roll and the first forming surface or velocity difference between a driven roll and the roll of water-soluble film. However, depending on how the second film web is utilized, the strain imparted to the second film web ("second strain") can be greater than the first strain. For example, where the second film is experiencing less deformation than the first film web, e.g. second film web is simply a cover for the first film web, the second strain may be greater than or equal to about 2 percent and less than or equal to about 10 percent. For example, the second strain may be from between about 2 percent to about 10 percent, more preferably from about 3 percent to about 9 percent, or most preferably from about 4 percent to about 8 percent, specifically reciting all values within these ranges and any ranges created thereby. In such configurations, the second strain may be greater than the first strain.

The resultant unit dose articles comprising only the first film web and the second film web, may comprise one chamber or a plurality of chambers. The plurality of chambers can be created where the one or more recesses in the plurality of first molds comprise internal walls separating a recess into discrete parts. Where the unit dose articles comprise a plurality of chambers, the chambers may be generally spaced from one another horizontally. And the plurality of chambers in such configurations can be disposed in any suitable arrangement, examples of which are described herein.

As noted previously, additional configurations for unit dose articles also include superposed configurations. In such configurations, a third film web may be utilized. The third film web may be provided to a second forming surface having a plurality of second molds therein. The plurality of second molds may also each comprise one or more recesses therein. The second forming surface may comprise a drum conveyor or a horizontal conveyor.

Similar to the first and second film webs, the third film web may be provided to the second forming surface via one or more rolls. These one or more rolls may be configured to provide tension to the third film in order to reduce the likelihood of wrinkles. For example, the one or more rolls may have a velocity difference among each other and/or have a velocity difference with respect to a velocity of the second forming surface. The second forming surface can have the same velocity as the form conveyor, i.e. the first velocity.

In such configurations, the strain imparted to the third film web ("third strain") may be greater than or equal to about 3 percent and less than or equal to about 16 percent. For example, the third strain may be from about 3 percent to about 16 percent, more preferably from about 4 percent to about 15 percent, or most preferably from about 5 percent to about 14 percent, specifically reciting all values within these ranges and any ranges created thereby.

The third strain may be greater than the first strain. In some instances, the third strain may be greater than the

first strain and less than the second strain. Such strain profiles may be particularly useful where the deformation experienced by the third film web is less than the deformation experienced by the first film web. For example, where the depth and/or volume of the one or more recesses in the plurality of second molds are less than those of the plurality of first molds for the first film web, the third strain may be greater than the first strain. In some instances, the third strain may be greater than the first and second strains.

It is worth noting that in configurations where the third film web is utilized, e.g. a superposed configuration, the first and second strains may be different than those utilized where there are only two film webs, e.g. side-by-side configuration. For example, where three film webs or more are utilized, the first strain may be from about 1 percent to about 10 percent, more preferably from about 2 percent to about 9 percent, or most preferably from about 2 percent to about 8 percent, specifically reciting all values within these ranges and any ranges created thereby. Similarly, the second strain - in configurations where three or more film webs are utilized - may be from about 3 percent to about 14 percent, more preferably from about 4 percent to about 13 percent or most preferably from about 5 percent to about 12 percent, specifically reciting all values within these ranges or any ranges created thereby.

Where only two films are utilized, a first difference between the first strain and the second strain can be smaller than a second difference between the first strain and the second strain when a third film is utilized. It is believed that where only two films are utilized, seams creating the unit dose articles only comprise the first and the second film. A higher second strain may lead to curling of the seams which leads to an unattractive unit dose article. In contrast, where a third film is utilized, seams for the unit dose article comprise the first, second and third film webs. Due to the addition of the third web, it is believed that the second difference between the second strain and first strain may be greater than the first difference. The evaluation of the first strain, second strain and third strain are discussed in additional detail herein.

The first difference (in the two-film configuration between the first strain and the second strain) can be from between about 1 percent to about 9 percent, more preferably from about 1 percent to about 6 percent or most preferably from about 1 percent to about 3 percent, specifically reciting all values within these ranges and any ranges created thereby.

Similarly, the second difference (in the three-film configuration between the first strain and the second strain) can be from between about 2 percent to about 13 percent, more preferably from about 4 percent to about 12 percent, or most preferably from about 5 percent to about 11 percent, specifically reciting all values within these ranges and any ranges created thereby.

The third film web may be conformed to a plurality of recesses in the plurality of second molds. The conforming of the third film web provides one or more cavities therein. The conforming of the third film web may be the same or similar to the process described regarding conforming of the first film web. The one or more cavities in the third web are filled with one or more treatment agents.

Once filled, the third film web may be joined to the second film web thereby creating a portion of a unit dose article. The joining of the third film web to the second film web can occur at differing times depending on the configuration of the converter. For example, where each of the first and second forming surfaces comprise a horizontal conveyor, the joining of the second film web to the third film web can be upstream of the joining of the second film web to the first film web or downstream thereof. However, where the first forming surface is a horizontal conveyor and the second forming surface comprises a drum conveyor, the joining of the second film web to the third film web can be be upstream of the joining of the second film web to the first film web. The joining of the third film web to the second film web creates at least a portion of a soluble unit dose article. This portion may comprise a single chamber or a plurality of chambers similar to the joining of the first film web and the second film web.

In some forms, at least two of the plurality of chambers comprise different treatment agents. For example, particularly in superposed constructions, the unit dose articles may comprise a first portion and a second portion. The first portion may comprise a part of the first film web and a part of the second film web while the second portion comprises a part of the third film web and a part of the second film web. The first portion may comprise one or more chambers, and the second portion may comprise one or more chambers. The first portion may have a larger number of chambers than the second portion or vice versa. Also, a chamber in the first portion and a chamber in the second portion may each comprise one or more treatment agents that comprise at least one of powder, a gel, a liquid, or combinations thereof. And, the one or more treatment agents in the first portion and the second portion may be different, e.g. a powder and a gel, respectively. The one or more treatment agents are discussed in additional detail hereafter.

An exemplary converter for the process and products of the present disclosure is provided in FIGS. 1A and 3. The converter 1 can comprise a printing unit 110, a first forming surface 120, a heater 140, and a dispenser 150. Additionally, the first forming surface 120 comprises a plurality of first molds 130 movably mounted on the first forming surface 120. As shown, a first roll of water-soluble film 100 provides a first film web 105 to the printing unit 110 and to the first forming surface 120. It should be noted that the printing unit 110 is optional and is not required to be part of the process of the present disclosure. And, where printing is desired / required, printing on the first film web 105 may occur at any suitable location in the processes of the present disclosure. Printing on the films in accordance with the present disclosure is described in additional detail herein.

As shown, the first film web 105 may be provided to a first roll 112A and/or a second roll 112B. The first roll

112A and/or second roll 112B may be heated as part of a thermoforming process. Where the first roll 112A and/or second roll 112B are heated, the need for the heater 140 may be obviated. Similarly, where the converter 1 comprises the heater 140, the need for heating the first roll 112A and/or the second roll 112B may be obviated.

Now referring to FIGS. 1A, 1B and 3 as noted previously, the first film web 105 is provided to the first forming surface 120. The first film web 105 is tensioned thereby imparting the first strain into the first film web 105. For example, the first roll 112A and/or second roll 112B may have lower tangential velocity(ies) than that of the first forming surface 120, i.e. first velocity. In such examples, the first velocity may be from about 2 m/min to about 20 m/min, more preferably from about 5 m/min to about 20 m/min, specifically reciting all values within these ranges and any ranges created thereby. In contrast, the tangential velocity of the first roll 112A can be less than the first velocity. Such a difference between the tangential velocity of the first roll 112A and/or second roll 112B induces the first strain into the first film web 105. The first strain is discussed in additional detail herein.

As noted previously, the amount of strain, e.g. first strain, imparted to the a film web, e.g. the first film web 105, should be carefully considered. For example, the first film web 105 comprises longitudinal edges 105A and 105B. The first film web 105 can be held in place on the plurality of first molds 130 via a vacuum system - described in additional detail hereafter. Strain imparted to the first film web 105 can cause necking in the film web. Necking is where the longitudinal edges 105A and/or 105B move inward - towards each other. If the applied strain is too great, then the longitudinal edges 105A and/or 105B can be disposed inboard to such an extent as to break the vacuum seal in each of the plurality of first molds 130.

Referring now to FIGS. 1A-1C and 3, the first film web 105 can be provided to the first forming surface 120 and onto the plurality of first molds 130 downstream of the second roll 112B with the first strain imparted thereon. A first vacuum system 166 can pull vacuum on the first film web 105 deforming the film web to one or more recesses 170 in each of the plurality of first molds 130.

The first forming surface 120 can convey the plurality of first molds 130 in a machine direction MD during formation and filling of the unit dose articles. The plurality of first molds 130 can be provided with one or more vacuum transmission systems 585. The plurality of first molds 130 can have a vacuum system for holding the first film web 105 on the molds 130. Each of the plurality of first molds 130 can have a land area 531 that surrounds the respective recess 170, the first recess or recesses 170 and second recess or recesses. Each of the one or more recesses 170 can have a first porous face 575. The one or more recesses 170 may comprise internal walls which partition the recess into discrete parts. In such configurations, the resultant unit dose articles, or at least the portion formed by the first film web 105, may comprise multiple chambers which are in a side-by-side configurations.

As shown, the first vacuum source 166 may act upon the first film web 105 shortly after the first film web 105 is provided to the first forming surface 120. A second vacuum system 176 - applying a higher vacuum pressure - to the first film web 105 may be applied subsequent to the first vacuum system 166. At least a portion of the second vacuum system 176 may occur while the first film web 105 is also being heated by the heater 140. Alternatively, the second vacuum system 176 may be configured such that the second higher vacuum pressure is not applied to the first film web 105 until the first film web 105 is downstream of the heater 140. It is worth nothing that in some configurations, only one vacuum pressure may be applied to the first film web 105.

The application of vacuum to the first film web 105 forces portions of the first film web 105 to assume the shape of the one or more recesses 170 in the plurality of first molds 130. This assumption of the shape of the first film web 105 to the one or more recesses 170 creates one or more cavities 580 in the first film web 105, i.e. a formed first web. The formed first web may receive one or more treatment agents from the dispenser 150. The formed first web, subsequent to being filled with one or more treatment agents, i.e. a filled first film web, is sealed. The heating and applied vacuum to the first film web 105 are discussed in additional detail hereafter.

The one or more treatment agents may be placed on the first film web 105 prior to deformation of the first film web 105 forming the one or more cavities therein, during deformation of the first film web 105, or after the first film web 105 has been deformed, i.e. the formed first web. Alternatively, provision of the one or more treatment agents may be during part of any of the aforesaid periods or overlapping with any of such periods.

Referring now to FIGS. 1A-1C, a second water-soluble film roll 160 may provide a second film web 165 to the first forming surface 120. Similar to the first film web 105, the second film web 165 may have strain induced thereon via a roll 172. The roll 172 can be utilized to help provide the second film web 165 from the second film roll 160 to the first forming surface 120. However, the roll 172 may have a second tangential velocity which is lower than the first velocity. This configuration can induce strain into the second film web 165 thereby reducing the likelihood of wrinkles. The second strain is discussed in additional detail herein.

Where the second film web 165 is only used to seal the first film web 105, the second strain can be greater than the first strain. Specifically, where the second film web 165 is not being deformed, e.g. to form one or more cavities therein, the level of strain imparted to the second film web 165 can be greater than that applied to the first film web 105. It is worth noting that in such configurations, a nip roll 173 may be utilized to seal the second film web 165 to the first film web 105. The nip roll 173 can have a tangential velocity equal to that of the first velocity.

Referring now to FIGS. 1A and 2A, once strain is imparted to the second film web 165, the second film web 165 can be applied to the first film web 105 thereby creating a joined water-soluble film web 255. The combined water-soluble film web 255 may comprise a plurality of unit dose articles 270. As shown, in such configurations, particularly where the second strain is greater than the first strain, longitudinal side edges, i.e. 165A and 165B, of the second film web 165, may be disposed inboard of the longitudinal side edges 105A and 105B, respectively of the first film web 105.

Now referring to FIGS. 1C-2C, the second film web 165 may be sealed to the first film web 165 about a periphery 231 (positioned on the land areas 531 of the plurality of first molds 130) about each of the one or more cavities 580. The sealing of the second film web 165 to the first film web 105 can be performed via any suitable process.

As noted, the sealing may occur in the land area 531 between individual one or more recesses 170 in the plurality of first molds 130. Non-limiting examples of such means include heat sealing, solvent welding, solvent or wet sealing, and combinations thereof. Heat and or solvent can be applied to the entire surface of the sheet or only the area which is to form the seal can be treated with heat or solvent. The heat or solvent can be applied by any process, typically on the closing material. The heat and/or solvent can be applied only on the areas which are to form the seal or may be applied to the entire film web. If solvent or wet sealing or welding is used, heat can also be applied. Wet or solvent sealing/welding processes include selectively applying solvent, e.g. water, onto the area between the molds, or on the closing material, by for example, spraying or printing this onto these areas, and then applying pressure onto these areas, to form the seal. Sealing rolls and belts as described above that optionally also provide heat can be used, for example. Additional details regarding exemplary processes for sealing of water-soluble film webs together is provided in U.S. Patent Application Publication No. US2022/0025303, U.S. Patent No. US6989072, European Patent Application Publication Nos. EP3323740B1 and EP1406953 and PCT Application Publication Nos. WO03008180, WO2005121225, WO2004009335, WO2014197415,

It is worth noting that applying solvent, e.g. water, to the first film web and/or the second film web can alter the strain properties of the film. For example, the application of a solvent, e.g. water, also known as "wetting", can cause the film web to swell and can cause the film to plasticize to some extent. This can reduce the film webs elastic modulus. So, while wetting does not necessarily change the applied strain, it can change the elastic modulus which results in a lower stress for a given strain.

Once the second film web 165 is sealed to the filled first web, the joined water-soluble film web 255 may be further processed. For example, the joined film web 255 may be cut along cut lines 267 which are generally parallel to the MD direction and cut lines 269 which are generally parallel to the CD direction. This cutting step creates a plurality of unit dose articles 270. It is worth noting that as shown, the cut lines 267 and 269 may be configured to yield a plurality of individual unit dose articles. However, configurations are contemplated where the cut lines 267 and 269 are configured to yield a plurality of unit dose articles 270 which are connected to at least one adjacent unit dose article 270.

Cutting can be accomplished using any known process. The cutting can be done in continuous manner, optionally with constant speed and in a horizontal position. The cutting device can, for example, be a sharp item or a hot item, whereby in the latter case, the hot item 'burns' through the sheet/sealing area. The cutting device or devices can be a rotary die cutter to make cuts in the CD direction and a cutting wheel to make cuts in the machine direction MD.

Where the unit dose articles 270 comprises the first film web 105 and the second film web 165, a myriad of chamber configurations may be achievable. For example, the unit dose articles 270 may comprise a single chamber 271. As another example, the unit dose articles 270 may comprise a plurality of chambers 271 and 272. The plurality of chambers 271 and/or 272 may comprise any suitable shape. As shown, the plurality of chambers 271 and 272 may comprise circles, triangles, stars, rainbows, horseshoes, clover, rectangles, other polygons or combinations thereof. The unit dose articles 270 of the present disclosure may comprise two or more chambers arranged in any suitable shape.

It is worth noting that the joined water-soluble film web 255 may comprise a plurality of unit dose articles that have a variety of chamber configurations. For example, the combined water-soluble film web 255 may comprise a first unit dose article comprising a single chamber and another unit dose article comprising a plurality of chambers. As another example, the combined water-soluble film web 255 may comprise a first unit dose article comprising a plurality of chambers, wherein the chambers have a first shape, e.g. a circle and a second unit dose article comprising a plurality of chambers, wherein the chambers have a second shape, e.g. a triangle.

Regarding the additional detail pertaining to the heating and vacuum applied to the first film 105, we refer back to FIGS. 1A, 1C and 3. As noted previously, as the first film web 105 is conveyed in the machine direction MD, the first film web 105 can pass beneath a heater 140. Recall that where the first roll 112A and/or the second roll 112B are heated, the need for a separate heating step via heater 140, may be obviated. Where heater 140 is utilized in the processes of the present disclosure, the heater 140 can be an infrared emitter, e.g. lamp, a hot plate or a combination thereof. Preferably, the heater 140 can be an infrared lamp having a temperature of from about 200 °C to about 1000 °C. As the first film web 105 passes beneath the heater 140, the first film web 105 can be heated to the desired temperature. The distance between the heater 140 and the first film web 105 can be adjustable so that the temperature of the first film web 105 can be controlled. Similarly, the temperature of the heater 140 can be adjustable so that the temperature of the first film web 105 can be controlled.

Where the first roll 112A and/or second roll 112B are utilized to heat the first film web 105, their operating temperatures can be much less than that of the heater 140. For example, the first roll 112A and/or the second roll 112B may have an outer surface temperature of from about 75 °C to about 140 °C.

Regarding the vacuum applied to the first film web 105, recall that heat from the heater 140 may be applied in concurrence with the application of the vacuum although this is not a requirement. Also as noted, heating of the first film web 105 can occur upstream of the vacuum being applied to the first film web 105. The first vacuum system 166 can be used to apply a first negative gage pressure to the first porous face 575 of the one or more recesses 170. When the first negative gage pressure is applied to the first porous face 575 of the one or more recesses 170, the first web 105 can be at a first maximum temperature. When the first web 105 is heated, it is possible that the temperature of the first web is non-uniform in the MD direction and the CD direction. This can occur because when a web is being carried by the plurality of first molds 130, part of the web is resting on the land area 531 of the plurality of first molds 130 and part of the web is overlying the one or more recesses 170. The difference in boundary conditions for the first film web 105 in the direction of the thickness of the first web 105 can result in non-uniform heating of the first film web 105. For instance, the portion of a web overlying the center of a recess may be at a temperature of 107 °C and the portion of the web out on the land area 531 may have a temperature of about 25 °C. As another example, the portion of a web overlying the center of a recess may be at a temperature of 103 °C and the portion of the web out on the land area 531 may have a temperature of about 26 °C. As yet another example, the portion of a web overlying the center of a cavity may be at a temperature of 108 °C and the portion of the web out on the land area 531 may have a temperature of about 24 °C.

The maximum temperature as referred to herein is the maximum local temperature of the portion of the web being formed. The maximum temperature as referred to herein can be the maximum local temperature of the portion of the web being thermoformed. A higher temperature of the portion of the web overlying the center of a recess can promote improved thermoforming resulting in fewer and or less structurally significant microscopic cracks. Further, higher temperatures during thermoforming can promote plastic deformation which can result in less internal pressure of the finished article as compared to if the web is elastically deformed. If the temperature is too high, the web may become so pliable that the web may be drawn into holes in the forming surface which can be detrimental to the structural integrity of the finished article.

The first maximum temperature can be from about 5 °C to about 100 °C, from about 10 °C to about 100 °C, from about 20 °C to about 100 °C, or from about 60 to about 100 °C. The first maximum temperature can be such that the deformation of the first film web 105 is by thermoforming.

The first porous face 575 of the one or more recesses 170 can comprise openings having an area from about 0.1 $mm^2$ to about 2 $mm^2$, from about 0.5 $mm^2$ to about 1 $mm^2$, or from about 0.5 $mm^2$ to about 1.5 $mm^2$. The openings can be circular openings. There can be from about 2 to about 2000 openings. The openings can be sized such that at the temperature of deformation, plastic deformation, or thermoforming, the web is not drawn into the openings to a degree such that the structural integrity of the finished article is compromised.

Each of the one or more recesses 170 in the plurality of first molds 130 can have a volume from about 5 mL to about 300 mL, from about 5 mL to about 40 mL or from about 14 mL to about 18 mL.

The first film web 105 can be subjected to the first negative gage pressure for from about 1 s to about 10 s, from about 2 s to about 5 s or more preferably from about 1 s to about 3 s. The first negative gage pressure can be from about 10 mbar to about 40 mbar below atmospheric pressure. The first negative gage pressure can be from about 10 mbar to about 90 mbar below atmospheric pressure or from about 25 mbar to about 35 mbar below atmospheric pressure.

The first film web 105 can have a temperature of from about 5 °C to about 100 °C, or even from about 10 °C to about 100 °C, or even from about 20 °C to about 100 °C, when the first negative gage pressure is applied to the first film web 105. The lower the first negative gage pressure the faster the first film web 105 will be deformed. Slower deformation can reduce the amount of micro-cracking in the formed first web. For a lower the temperature of deformation, the first negative gage pressure may be greater, i.e. less vacuum, so that deformation of the first film web 105 is slow, which can reduce micro-cracking in the formed first web.

As the first film web 105 is conveyed further in the machine direction MD, a second negative gage pressure can be applied to the first porous face 575 of the one or more recesses 170 when the first film web 105 is at a second maximum temperature. The second negative gage pressure can be applied via the second vacuum system 176. The second maximum temperature can be greater than the first maximum temperature.

For clarity, gage pressure is zero referenced at atmospheric pressure. So, if the first negative gage pressure is 50 mbar below atmospheric pressure and the second negative gage pressure is 100 mbar below atmospheric pressure, it can be said that the second negative gage pressure is less than the first negative gage pressure. And, it can be said a gage pressure of 50 mbar below atmospheric pressure is a negative gage pressure since it is pressure below atmospheric pressure. Since a negative gage pressure of 50 mbar below atmospheric pressure is below atmospheric pressure, it is a vacuum. So, in the circumstances in which the second negative gage pressure is less than or equal to the first negative gage pressure, it can be thought of as the first negative gage pressure being a first level of vacuum and the second negative gage pressure being a second level of vacuum, and the second level of vacuum is more forceful than

the first level of vacuum.

The second maximum temperature can be from about 90 °C to about 150 °C. The second negative gage pressure can be from about 150 mbar to about 400 mbar below atmospheric pressure, from about 180 mbar to about 260 mbar below atmospheric pressure, from about 180 mbar to about 230 mbar below atmospheric pressure, or from about 210 mbar to about 230 mbar below atmospheric pressure. That is, the second negative gage pressure pulls harder on the first film web 105 than the first negative gage pressure.

The first negative gage pressure, second negative gage pressure, first maximum temperature, and second maximum temperature can be selected so that the compartment 580 is well formed, the first web 505 is not drawn into the openings in the first porous face 575 to an unacceptable degree, and the amount of micro-cracking that occurs during deformation of the first web 505 is limited to an acceptable degree. In general, the higher the second temperature, the greater the second negative gage pressure can be since it can be easier to deform the first web 505 at a higher temperature.

It is also worth noting that a combination of vacuum and/or other sources of pressure differential may be utilized in the deformation of the film webs disclosed herein. For example, the first pressure difference across the first film web 105 can be provided by, by way of non-limiting example, fluid pressure from above the mold. The fluid can be a heated fluid. The fluid pressure that can act on the water soluble first film web 105 can be provided by a gas such as air or a liquid. For instance, nozzles can dispense fluid, by way of non-limiting example a gas, under pressure in a direction towards the first film web 105 to conform the first film web 105 to the first porous face 575 of the one or more cavities 170.

The second web 165 can be at a temperature of from about ambient temperature to about 120 °C. The second web 165 can be at a temperature of from about 10 °C to about 120 °C. The second web 165 can be at a temperature of from about 20 °C to about 120 °C.

As noted previously, where a superposed unit dose article configuration is desired, an additional film web, i.e. a third film web, may be required. An exemplary process for making superposed unit dose articles is shown in FIG. 3.

As shown in FIG. 3, the converter 1 may further comprise a second unit dose article forming device 500. The process for forming superposed unit dose articles includes several of the same steps as described herein regarding the converter 1 (shown in FIG. 1A). For example, tension is applied to the first film web 105 as described herein. Similarly, the first film web 105 is deformed into the one or more recesses in the plurality of first molds as described herein. Additionally, the second film 165 is tensioned, applied to and joined to the first film web as described herein. However, prior to the sealing of the second film 165 to the filled first web, the second film web 165 may be applied to and sealed to a third film web.

As shown, a third roll of water-soluble film 300 may provide, to the second unit dose article forming device 500, a third film web 305. Much like the first film web 105 (shown in FIG. 1A), the third film web 305 can be carried on a roller 309. The roller 309 may be heated and can heat the third film web 305 to a temperature of from about 80 °C to about 135 °C or from about 90 °C to about 125 °C. The higher the temperature of the third web 305, the greater the propensity for the deformation to be by thermoforming.

Additionally, the roller 309 may comprise a tangential velocity which is less than the first velocity. This velocity difference induces strain into the third film web 305. The induced strain to the third film web 305 reduces the likelihood of wrinkles forming in the third film web 305. The strain imposed on the third film web 305 ("third strain") can be greater than the first strain. When compared to the second strain, the third strain may be less than the second strain or may be equal to the second strain. It is worth noting that an additional roller may be disposed between the roller 309 and the third roll of water-soluble film 300. In such configurations, the additional roller may comprise a lower tangential velocity than the first velocity and the roller 309 may have the same tangential velocity as the additional roller or have the same tangential velocity as the first velocity.

It is worth noting that in some configurations, the third strain may be similar or the same as the first strain. For example, where the first film web 105 (shown in FIG. 1A) and the third film web 305 are being deformed to the same or similar extent, the first strain and the third strain may be equal to each other. The third strain is discussed in additional detail herein.

The third film web 305 can be carried on a plurality of second molds 332 on a second forming surface 320. The second forming surface 320 for the third film web 305 can be a belt system similar to that as shown in FIG. 1A for the plurality of first molds 130. The second forming surface 320 for the third film web 305 can be a rotating drum system as shown in FIG. 3A. As shown, a belt system can be used to convey the first film web 105 and the plurality of first molds 130 used to form the first film web 105, i.e. formed first web. Similarly, a belt system can be used to convey the third film web 305 and plurality of second molds 332 used to form by deformation, plastic deformation, or thermoforming, the third film web 305. In a drum system, the plurality of second molds 332 can be mounted on or formed in a rotating drum 321 and can be used to thermoform the third film web 305.

Referring now to FIGS. 1C and 3, the plurality of second molds 332 and plurality of first molds 130 can be fundamentally structured in the same manner as one another. So, Fig. 1C is representative of the plurality of second molds 332 and the plurality of first molds 130. For example, the plurality of second molds 332 comprise one or more recesses 371. The plurality of second molds 332 may comprise a vacuum transmission system.

The plurality of second molds 332 can comprise second porous face 376. The second porous face 376 can have a different shape than the first porous face 575, different size openings in the second porous face 376 to connect the one or more recesses 371 to the vacuum transmission system 585, different land area 531, and different volume, among other possible differences. The plurality of second molds 332 can comprise land areas 531 as described herein regarding the plurality of first molds 130 (shown in FIG. 1A). The second porous face 376 of the one or more recesses 371 can comprise openings having an area from about 0.1 $mm^2$ to about 2 $mm^2$ or from about 0.5 $mm^2$ to about 1 $mm^2$. The openings can be circular openings. There can be from about 2 to about 2000 openings.

Additionally, the one or more recesses 371 in the plurality of second molds 532 can have the same shape or different shape as the plurality of first molds 130. The one or more recesses 371 can have a volume of from about 0.5 mL to about 10 mL. The one or more cavities 371 can have a surface area of from about 100 to about 1500 $mm^2$.

The difference between the plurality of second molds 332 and the plurality of first molds 130 can be in the shape of the one or more recesses of each respective mold. Further, a difference between the plurality of second molds 332 and the plurality of first molds 130 can be the shape of the underside of the respective mold so that such mold can conform, be attached to, or fit with the conveyor system 320 or conveyor system 120, respectively. The one or more recesses 371 may comprise internal walls which partition the recess into discrete parts. In such configurations, the resultant unit dose article, or at least the portion formed by the third film web 305, may comprise multiple chambers which are in a side-by-side configurations.

The rotating drum 321 can be heated either in conjunction with the roller 309. Heat can be conducted to the plurality of second molds 332. The rotating drum 321 can have a temperature of from about 25 to about 70 °C. Regardless of how the third film web 305 is heated, the temperature of the roller 309 and optionally the rotating drum can be set so that the temperature of the third film web 305 is from about 100 to about 135 °C when the third film web 305 is carried on the plurality of second molds 332 mounted on the rotating drum 321.

The interior of the rotating drum can be provided with a third vacuum system 420. The third vacuum system 420 can be in fluid communication with the second porous face 376 of the one or more recesses 371 of the plurality of second molds 332 via a vacuum transmission system. As the third film web 305 is carried on the plurality of second molds 332 by the conveyor system 320, a third negative gage pressure is applied to the second porous face 576 and thereby to the third film web 305. The third negative gage pressure can deform the third film web 305 into the one or more recesses 371. The deformation of the third film web 305 can be by plastic deformation. The deformation of the third film web 305 can be by thermoforming. The third film web 305 can be at a temperature of from about 100 °C to about 135 °C or from about 100 °C to about 125 °C when the third negative gage pressure is applied to the second porous face 376.

By applying a third pressure difference across the water soluble third film web 305, the third film web 305 can be deformed into the one or more recesses 371 thereby forming one or more cavities in the third film web 305. The third pressure difference can be applied by applying a third negative gage pressure to the second porous face 376. The third pressure difference across the water soluble third film web 305 can be provided, by way of non-limiting example, fluid pressure from above the plurality of second molds 332. The fluid can be a heated fluid. The fluid pressure that can act on the water soluble third film web 305 can be provided by a gas such as air or a liquid. For instance, nozzles can dispense fluid, by way of non-limiting example gas, under pressure in a direction towards the third film web 305 to conform the third film web 305 to the second porous face 376 of each of the one or more recesses 371.

Once one or more cavities are formed in the third film web 305 ("third formed web"), one or more treatment agents can be placed in each of the one or more cavities. The one or more cavities in the third formed web can be filled or partially filled with the one or more treatment agents. Filling or partial filling can be provided by a dispenser 350. Filling can occur when the one or more cavities are proximal the apex of their respective travel path. If the plurality of second molds 332 is conveyed on a drum system, filling may occur when each of the plurality of second molds 332 is proximal its highest elevation. If the plurality of second molds 332 is conveyed on a belt system, filling can be provided at a location at or downstream of where the one or more cavities are formed.

It is worth noting that the dispensers 150 (shown in FIGS. 1A and 3) and the dispenser 350 associated with the plurality of second molds 332 can travel with the first forming surface or the second forming surface 320, respectively, for at least part of the range of motion of their respective forming surfaces. After the one or more cavities in the third formed web are filled, the second film web 165 can then be sealed to the third film web 305 to form a portion of the complete unit dose article.

The one or more treatment agents can be placed on the third film web 305 prior to formation of the one or more cavities in the third film web 305, during formation of the one or more cavities in the third film web 305, after the formation of the one or more cavities in the third film web 305 or during or part of any of the aforesaid periods or overlapping with any of such periods.

Any suitable process of joining the second film web 165 and the third film web 305 may be used. The joining may occur in the landing areas between the one or more cavities of the plurality of second molds 332. Non-limiting examples of such means include heat sealing, solvent welding, solvent or wet sealing, and combinations thereof. Heat

and or solvent can be applied to the entire surface of the sheet or only the area which is to form a seal is treated with heat or solvent. The heat or solvent can be applied by any process, typically on the closing material, and typically only on the areas which are to form the seal. If solvent or wet sealing or welding is used, heat can also be applied. Wet or solvent sealing/welding processes include selectively applying solvent onto the area between the molds, or on the closing material, by for example, spraying or printing this onto these areas, and then applying pressure onto these areas, to form the seal. Sealing rolls and belts as described above that optionally also provide heat can be used, for example.

It is worth noting that applying solvent, e.g. water, to the first film web and/or the second film web can alter the strain properties of the film. For example, the application of a solvent, e.g. water, also known as "wetting", can cause the film web to swell and can cause the film to plasticize to some extent. This can reduce the film webs elastic modulus. So, while wetting does not necessarily change the applied strain, it can change the elastic modulus which results in a lower stress for a given strain.

Referring to FIGS 3 and 4, the unit dose articles 270 formed via the process shown in FIG. 3 may comprise a first portion 430 and a second portion 440. The first portion 430 comprises a portion of the first film web 105 and a portion of the second film web 165. The second portion 440 comprises a portion of the third film web 305 and a portion of the second film web 165. The second portion is formed when the second film web 165 is applied to and joined to the third web. After formation of the second portion 440, the second portion 440 may be applied to and joined with the first film web 105. In such configurations, the second film web 165 may be joined / sealed to the first film web 105 as disclosed previously.

Referring now to FIGS. 1A, 3A and 4, as noted previously, the step of printing on either a film web or finished unit dose article is optional. However, where desired and/or required, the first film web and/or third film web, if utilized, can be printed upon. For example, the first film web 105 can be fed through the printing unit 110 prior to being placed on the first forming surface 120. Where the third film web 305 is printed upon, the printing unit 110 may be positioned more proximal to the web path of the third film web 305. Where both the first film web 105 and the third film web 305 are printed upon, then the converter 1 may comprise a plurality of printing units which provide printing to the first film web 105 and the third film web 305, respectively.

The printing unit 110 can print a first plurality 410 of adjacent printed characters 400 onto the first web. The first web 105 can then be fed onto the conveyor system 120. The conveyor system 120 can convey the plurality of first molds 130 in the machine direction MD. The dispenser 150 can be movable in the machine direction MD and in a direction upstream of the machine direction MD.

The printing unit 110 can be located between the first roll of water-soluble film 100 and the conveyor system 120. Optionally the printing unit 110 can be located between the second roll of water-soluble film 160 and the conveyor system 120. Optionally, the first roll of water-soluble film 100 can be a pre-printed film having the first plurality 410 of adjacent printed characters 400 disposed thereon and the printing unit 110 can be eliminated. Further optionally, the second roll of water-soluble film 160 can be a pre-printed web feed roll having the first plurality 410 of adjacent printed characters 400 disposed thereon and the printing unit 110 can be eliminated. The foregoing configurations for the first roll and second roll of water-soluble film 100 and 160, respectively, are equally applicable for the third roll of water-soluble film 300.

The first plurality 410 of adjacent printed characters 400 can be on either surface of the first film web 105, the second film web 165, and/or the third film web 305, and one or more of such webs. Any suitable method of printing may be utilized, e.g. flexographic and/or inkjet. Additionally, multiple units or combinations of units may be utilized. For example, multiple flexographic printing units may be utilized to print multiple colors. As another example one or more flexographic printing units may be utilized in combination with one or more inkjet printing units.

Preferably, the ink used in the printed area comprises between Oppm and 20ppm, preferably between Oppm and 15ppm, more preferably between Oppm and 10ppm, even more preferably between Oppm and 5ppm, even more preferably between Oppm and 1ppm, even more preferably between Oppb and 100ppb, most preferably Oppb dioxane. Those skilled in the art will be aware of known methods and techniques to determine the dioxane level within the ink formulations.

Regardless of whether the resultant unit dose articles being created are multi-chamber or single chamber, the one or more treatment agents described herein can be a liquid, solid or tablet or combinations thereof. The one or more treatment agents described herein may comprise a laundry detergent composition, an automatic dishwashing composition, a hard surface cleaning composition, or combinations thereof. The foregoing compositions may comprise a solid, a liquid or a mixture thereof. The term liquid includes a gel, a solution, a dispersion, a paste, or a mixture thereof. The solid may be a powder. By powder we herein mean that the detergent composition may comprise solid particulates or may be a single homogenous solid. In some examples, the powder detergent composition comprises particles. This means that the powder detergent composition comprises individual solid particles as opposed to the solid being a single homogenous solid. The particles may be free-flowing or may be compacted. A laundry detergent composition can be used in a fabric hand wash operation or may be used in an automatic machine fabric wash operation, for example in an automatic machine fabric wash operation.

Example laundry detergent compositions comprise a non-soap surfactant, wherein the non-soap surfactant comprises an anionic non-soap surfactant and a non-ionic surfactant. In some examples, the laundry detergent composition comprises between 10% and 60%, or between 20% and 55% by weight of the laundry detergent composition of the non-soap surfactant. Example weight ratio of non-soap anionic surfactant to nonionic surfactant are from 1:1 to 20:1, from 1.5:1 to 17.5:1, from 2:1 to 15:1, or from 2.5:1 to 13:1. Example non-soap anionic surfactants comprises linear alkylbenzene sulphonate, alkyl sulphate anionic surfactant or a mixture thereof. Example weight ratio of linear alkylbenzene sulphonate to alkyl sulphate anionic surfactant are from 1:2 to 9:1, from 1:1 to 7:1, from 1:1 to 5:1, or from 1:1 to 4:1. Example linear alkylbenzene sulphonates are $C_{10}$-$C_{16}$ alkyl benzene sulfonic acids, or $C_{11}$-$C_{14}$ alkyl benzene sulfonic acids. By 'linear', we herein mean the alkyl group is linear. Example alkyl sulphate anionic surfactant may comprise alkoxylated alkyl sulphate or non-alkoxylated alkyl sulphate or a mixture thereof. Example alkoxylated alkyl sulphate anionic surfactant comprise an ethoxylated alkyl sulphate anionic surfactant. Example alkyl sulphate anionic surfactant may comprise an ethoxylated alkyl sulphate anionic surfactant with a mol average degree of ethoxylation from 1 to 5, from 1 to 3, or from 2 to 3. Example alkyl sulphate anionic surfactant may comprise a non-ethoxylated alkyl sulphate and an ethoxylated alkyl sulphate wherein the mol average degree of ethoxylation of the alkyl sulphate anionic surfactant is from 1 to 5, from 1 to 3, or from 2 to 3. Example alkyl fraction of the alkyl sulphate anionic surfactant are derived from fatty alcohols, oxo-synthesized alcohols, Guerbet alcohols, or mixtures thereof. In some examples, the laundry detergent composition comprises between 10% and 50%, between 15% and 45%, between 20% and 40%, or between 30% and 40% by weight of the laundry detergent composition of the non-soap anionic surfactant. In some examples, the non-ionic surfactant is selected from alcohol alkoxylate, an oxo-synthesised alcohol alkoxylate, Guerbet alcohol alkoxylates, alkyl phenol alcohol alkoxylates, or a mixture thereof. In some examples, the laundry detergent composition comprises between 0.01% and 10%, between 0.01% and 8%, between 0.1% and 6%, or between 0.15% and 5% by weight of the liquid laundry detergent composition of a non-ionic surfactant. In some examples, the laundry detergent composition comprises between 1.5% and 20%, between 2% and 15%, between 3% and 10%, or between 4% and 8% by weight of the laundry detergent composition of soap, in some examples a fatty acid salt, in some examples an amine neutralized fatty acid salt, wherein in some examples the amine is an alkanolamine for example selected from monoethanolamine, diethanolamine, triethanolamine or a mixture thereof, in some examples monoethanolamine. In some examples, the laundry detergent composition is a liquid laundry detergent composition. In some examples the liquid laundry detergent composition comprises less than 15%, or less than 12% by weight of the liquid laundry detergent composition of water. In some examples, the laundry detergent composition is a liquid laundry detergent composition comprising a non-aqueous solvent selected from 1,2-propanediol, dipropylene glycol, tripropyleneglycol, glycerol, sorbitol, polyethylene glycol or a mixture thereof. In some examples, the liquid laundry detergent composition comprises between 10% and 40%, or between 15% and 30% by weight of the liquid laundry detergent composition of the non-aqueous solvent. In some examples, the laundry detergent composition comprises a perfume. In some examples, the laundry detergent composition comprises an adjunct ingredient which can be selected from the group comprising builders including citrate, (encapsulated) enzymes including but not limited to proteases, amylases, lipases, cellulases, mannanases, xyloglucanases, DNA'ses, and mixtures thereof, bleach, bleach catalyst, aesthetic dye, hueing dye, brightener, cleaning polymers including alkoxylated polyamines and polyethyleneimines, soil release polymers, fabric conditioning polymers including Polyquaternium 10 (CathEC), further surfactant including amine oxide and solvent, chelants including aminocarboxylate and aminophosphonate chelants, dye transfer inhibitors, encapsulated perfume, polycarboxylates, structurant, pH trimming agents, antioxidants, preservatives, antibacterial agents including Tinosan HP100, probiotics, and mixtures thereof. In some examples, the laundry detergent composition has a pH between 6 and 10, between 6.5 and 8.9, or between 7 and 8, wherein the pH of the laundry detergent composition is measured as a 10% product concentration in demineralized water at 20°C. When liquid, the laundry detergent composition may be Newtonian or non-Newtonian. In some examples, the liquid laundry detergent composition is non-Newtonian. Without wishing to be bound by theory, a non-Newtonian liquid has properties that differ from those of a Newtonian liquid, more specifically, the viscosity of non-Newtonian liquids is dependent on shear rate, while a Newtonian liquid has a constant viscosity independent of the applied shear rate. The decreased viscosity upon shear application for non-Newtonian liquids is thought to further facilitate liquid detergent dissolution. The liquid laundry detergent composition described herein can have any suitable viscosity depending on factors such as formulated ingredients and purpose of the composition.

The first film web, second film web, and/or third film web disclosed anywhere herein can be a printed web. Similarly, any of the portions of film forming the unit dose article can be printed sheets. The printing of the web or sheet can be on any surface thereof. The printing can be text and/or graphics. The printing can provide information as required by regulations governing products sold in particular geographies. The printing can provide usage instructions.

Suitable bittering agents include, but are not limited to, naringin, sucrose octaacetate, quinine hydrochloride, denatonium benzoate, or mixtures thereof. Example levels of aversive agent include, but are not limited to, 1 to 5000ppm, 100 to 2500ppm, or 250 to 2000ppm. The water-soluble film or water-soluble unit dose article or both may be coated with a lubricating agent. In some examples, the lubricating agent is selected from talc, zinc oxide, silicas, siloxanes, zeolites, silicic acid, alumina, sodium sulphate, potassium sulphate, calcium carbonate, magnesium carbonate, sodium

citrate, sodium tripolyphosphate, potassium citrate, potassium tripolyphosphate, calcium stearate, zinc stearate, magnesium stearate, starch, modified starches, clay, kaolin, gypsum, cyclodextrins or mixtures thereof.

The water-soluble films of the present disclosure are soluble or dispersible in water. The water-soluble films preferably have a thickness of from 20 to 150 micron, preferably 35 to 125 micron, even more preferably 50 to 110 micron, most preferably about 76 micron.

Preferably, the films have a water-solubility of at least 50%, preferably at least 75% or even at least 95%, as measured by the method set out here after using a glass-filter with a maximum pore size of 20 microns: 5 grams ± 0.1 gram of film material is added in a pre-weighed 3L beaker and 2L ± 5ml of distilled water is added. This is stirred vigorously on a magnetic stirrer, Labline model No. 1250 or equivalent and 5 cm magnetic stirrer, set at 600 rpm, for 30 minutes at 30°C. Then, the mixture is filtered through a folded qualitative sintered-glass filter with a pore size as defined above (max. 20 micron). The water is dried off from the collected filtrate by any conventional method, and the weight of the remaining material is determined (which is the dissolved or dispersed fraction). Then, the percentage solubility or dispersability can be calculated.

The water-soluble films may be obtained by casting, blow-moulding, extrusion or blown extrusion of the polymeric material, as known in the art.

The water-soluble films comprise polyvinylalcohol. The polyvinylalcohol may be present between 50% and 95%, preferably between 55% and 90%, more preferably between 60% and 80% by weight of the water-soluble film. The polyvinylalcohol preferably comprises polyvinyl alcohol homopolymer, polyvinylalcohol copolymer, or a mixture thereof. Preferably, the water-soluble film comprises a blend of polyvinylalcohol homopolymers and/or anionic polyvinylalcohol copolymers, preferably wherein the polyvinylalcohol copolymers are selected from sulphonated and carboxylated anionic polyvinylalcohol copolymers especially carboxylated anionic polyvinylalcohol copolymers, most preferably the water-soluble film comprises a blend of a polyvinylalcohol homopolymer and a carboxylated anionic polyvinylalcohol copolymer, or a blend of polyvinylalcohol homopolymers. Alternatively, the polyvinylalcohol comprises an anionic polyvinyl alcohol copolymer, most preferably a carboxylated anionic polyvinylalcohol copolymer. When the polyvinylalcohol in the water-soluble films is a blend of a polyvinylalcohol homopolymer and a carboxylated anionic polyvinylalcohol copolymer, the homopolymer and the anionic copolymer are present in a relative weight ratio of 90/10 to 10/90, preferably 80/20 to 20/80, more preferably 70/30 to 50/50. Without wishing to be bound by theory, the term "homopolymer" generally includes polymers having a single type of monomeric repeating unit (e.g., a polymeric chain comprising or consisting of a single monomeric repeating unit). For the particular case of polyvinylalcohol, the term "homopolymer" further includes copolymers having a distribution of vinyl alcohol monomer units and optionally vinyl acetate monomer units, depending on the degree of hydrolysis (e.g., a polymeric chain comprising or consisting of vinyl alcohol and vinyl acetate monomer units). In the case of 100% hydrolysis, a polyvinylalcohol homopolymer can include only vinyl alcohol units. Without wishing to be bound by theory, the term "copolymer" generally includes polymers having two or more types of monomeric repeating units (e.g., a polymeric chain comprising or consisting of two or more different monomeric repeating units, whether as random copolymers, block copolymers, etc.). For the particular case of polyvinylalcohol, the term "copolymer" (or "polyvinylalcohol copolymer") further includes copolymers having a distribution of vinyl alcohol monomer units and vinyl acetate monomer units, depending on the degree of hydrolysis, as well as at least one other type of monomeric repeating unit (e.g., a ter- (or higher) polymeric chain comprising or consisting of vinyl alcohol monomer units, vinyl acetate monomer units, and one or more other monomer units, for example anionic monomer units). In the case of 100% hydrolysis, a polyvinylalcohol copolymer can include a copolymer having vinyl alcohol units and one or more other monomer units, but no vinyl acetate units. Without wishing to be bound by theory, the term "anionic copolymer" includes copolymers having an anionic monomer unit comprising an anionic moiety. General classes of anionic monomer units which can be used for the anionic polyvinyl alcohol co-polymer include the vinyl polymerization units corresponding to monocarboxylic acid vinyl monomers, their esters and anhydrides, dicarboxylic monomers having a polymerizable double bond, their esters and anhydrides, vinyl sulfonic acid monomers, and alkali metal salts of any of the foregoing. Examples of suitable anionic monomer units include the vinyl polymerization units corresponding to vinyl anionic monomers including vinyl acetic acid, maleic acid, monoalkyl maleate, dialkyl maleate, monomethyl maleate, dimethyl maleate, maleic anyhydride, fumaric acid, monoalkyl fumarate, dialkyl fumarate, monomethyl fumarate, dimethyl fumarate, fumaric anyhydride, itaconic acid, monomethyl itaconate, dimethyl itaconate, itaconic anhydride, vinyl sulfonic acid, allyl sulfonic acid, ethylene sulfonic acid, 2-acrylamido-1-methylpropanesulfonic acid, 2-acrylamido-2-methylpropanesulfonic acid, 2-methylacrylamido-2-methylpropanesulfonic acid, 2-sufoethyl acrylate, alkali metal salts of the foregoing (e.g., sodium, potassium, or other alkali metal salts), esters of the foregoing (e.g., methyl, ethyl, or other C1-C4 or C6 alkyl esters), and combinations thereof (e.g., multiple types of anionic monomers or equivalent forms of the same anionic monomer). The anionic monomer may be one or more acrylamido methylpropanesulfonic acids (e.g., 2-acrylamido-1-methylpropanesulfonic acid, 2-acrylamido-2-methylpropanesulfonic acid, 2-methylacrylamido-2-methylpropanesulfonic acid), alkali metal salts thereof (e.g., sodium salts), and combinations thereof. Preferably, the anionic moiety of the first anionic monomer unit is selected from a sulphonate, a carboxylate, or a mixture thereof, more preferably a carboxylate, most preferably an acrylate, a methacrylate, a maleate, or a mixture thereof. Preferably, the anionic monomer unit is present in the

anionic polyvinyl alcohol copolymer in an average amount in a range of between 1 mol.% and 10 mol.%, preferably between 2 mol.% and 5 mol.%. Preferably, the polyvinyl alcohol, and/or in case of polyvinylalcohol blends the individual polyvinylalcohol polymers, have an average viscosity ($\mu$1) in a range of between 4 mPa.s and 30 mPa.s, preferably between 10mPa.s and 25 mPa.s, measured as a 4% polyvinyl alcohol copolymer solution in demineralized water at 20 degrees C. The viscosity of a polyvinyl alcohol polymer is determined by measuring a freshly made solution using a Brookfield LV type viscometer with UL adapter as described in British Standard EN ISO 15023-2:2006 Annex E Brookfield Test method. It is international practice to state the viscosity of 4% aqueous polyvinyl alcohol solutions at 20 °C. It is well known in the art that the viscosity of an aqueous water-soluble polymer solution (polyvinylalcohol or otherwise) is correlated with the weight-average molecular weight of the same polymer, and often the viscosity is used as a proxy for weight-average molecular weight. Thus, the weight-average molecular weight of the polyvinylalcohol can be in a range of 30,000 to 175,000, or 30,000 to 100,000, or 55,000 to 80,000. Preferably, the polyvinyl alcohol, and/or in case of polyvinylalcohol blends the individual polyvinylalcohol polymers, have an average degree of hydrolysis in a range of between 75% and 99%, preferably between 80% and 95%, most preferably between 85% and 95%. A suitable test method to measure the degree of hydrolysis is as according to standard method JIS K6726.

In some examples, the first water-soluble film, the second water-soluble film and the third water soluble film, if present, comprise a polyvinylalcohol homopolymer, a polyvinylalcohol copolymer, or a blend thereof, preferably an anionic polyvinylalcohol copolymer or a blend of polyvinylalcohol homopolymers and/or anionic polyvinylalcohol copolymers, more preferably wherein the polyvinylalcohol copolymers are selected from sulphonated and carboxylated anionic polyvinylalcohol copolymers especially carboxylated anionic polyvinylalcohol copolymers, most preferably the water-soluble film comprises a carboxylated anionic polyvinylalcohol copolymer, or a blend of a polyvinylalcohol homopolymer and a carboxylated anionic polyvinylalcohol copolymer, or a blend of polyvinylalcohol homopolymers.

It is worth noting that the material of the film web will impact the amount of strain thereon. For example, as noted previously the elastic modulus of a material can be impacted by wetting. The elastic modulus can similarly be impacted by the material formulation of the film web. So, for differing material webs, the amount of stress applied may be different to achieve the desired strain.

Preferably, the water-soluble films comprise a non-aqueous plasticizer. Preferably, the non-aqueous plasticizer is selected from polyols, sugar alcohols, and mixtures thereof. Suitable polyols include polyols selected from the group consisting of glycerol, diglycerin, ethylene glycol, diethylene glycol, triethyleneglycol, tetraethylene glycol, polyethylene glycols up to 400 molecular weight, neopentyl glycol, 1,2-propylene glycol, 1,3-propanediol, dipropylene glycol, polypropylene glycol, 2-methyl-1,3-propanediol, trimethylolpropane and polyether polyols, or a mixture thereof. Suitable sugar alcohols include sugar alcohols selected from the group consisting of isomalt, maltitol, sorbitol, xylitol, erythritol, adonitol, dulcitol, pentaerythritol and mannitol, or a mixture thereof. More preferably the non-aqueous plasticizer is selected from glycerol, 1,2-propanediol, dipropylene glycol, 2-methyl-1,3-propanediol, trimethylolpropane, triethyleneglycol, polyethyleneglycol, sorbitol, or a mixture thereof, most preferably selected from glycerol, sorbitol, trimethylolpropane, dipropylene glycol, and mixtures thereof. One particularly suitable plasticizer system includes a blend of glycerol, sorbitol and trimethylol propane. Another particularly suitable plasticizer system includes a blend of glycerin, dipropylene glycol, and sorbitol. Preferably, the film comprises between 5% and 50%, preferably between 10% and 40%, more preferably between 20% and 30% by weight of the film of the non-aqueous plasticizer.

Preferably, the water-soluble films comprise a surfactant. Preferably, the water-soluble film comprises a surfactant in an amount between 0.1% and 2.5%, preferably between 1% and 2% by weight of the water-soluble film. Suitable surfactants can include the nonionic, cationic, anionic and zwitterionic classes. Suitable surfactants include, but are not limited to, polyoxyethylenated polyoxypropylene glycols, alcohol ethoxylates, alkylphenol ethoxylates, tertiary acetylenic glycols and alkanolamides (nonionics), polyoxyethylenated amines, quaternary ammonium salts and quaternized polyoxyethylenated amines (cationics), and amine oxides, N-alkylbetaines and sulfobetaines (zwitterionics). Other suitable surfactants include dioctyl sodium sulfosuccinate, lactylated fatty acid esters of glycerol and propylene glycol, lactylic esters of fatty acids, sodium alkyl sulfates, polysorbate 20, polysorbate 60, polysorbate 65, polysorbate 80, lecithin, acetylated fatty acid esters of glycerol and propylene glycol, and acetylated esters of fatty acids, and combinations thereof.

Preferably the water-soluble films according to the present disclosure comprise lubricants / release agents. Suitable lubricants/release agents can include, but are not limited to, fatty acids and their salts, fatty alcohols, fatty esters, fatty amines, fatty amine acetates and fatty amides. Preferred lubricants/release agents are fatty acids, fatty acid salts, and fatty amine acetates. The amount of lubricant/release agent in the water-soluble film is in a range of from 0.02% to 1.5%, preferably from 0.1% to 1% by weight of the water-soluble film.

Preferably, the water-soluble films comprise fillers, extenders, antiblocking agents, detackifying agents or a mixture thereof. Suitable fillers, extenders, antiblocking agents, detackifying agents or a mixture thereof include, but are not limited to, starches, modified starches, crosslinked polyvinylpyrrolidone, crosslinked cellulose, microcrystalline cellulose, silica, metallic oxides, calcium carbonate, talc and mica. Preferred materials are starches, modified starches and silica. Preferably, the amount of filler, extender, antiblocking agent, detackifying agent or mixture thereof in the water-soluble film is in a range of from 0.1% to 25%, preferably from 1% to 10%, more preferably from 2% to 8%, most preferably from 3% to 5% by weight of the water-soluble film. In the absence of starch, one preferred range for a suitable filler, extender, antiblocking agent, detackifying agent or mixture thereof is from 0.1% to 1%, preferably 4%, more preferably 6%, even more preferably from 1% to 4%, most preferably from 1% to 2.5%, by weight of the water-soluble film.

Preferably the water-soluble films according to the present disclosure have a residual moisture content of at least 4%, more preferably in a range of from 4% to 15%, even more preferably of from 5% to 10% by weight of the water-soluble film as measured by Karl Fischer titration.

Preferred films exhibit good dissolution in cold water, meaning unheated distilled water. Preferably such films exhibit good dissolution at temperatures of 24°C, even more preferably at 10°C. By good dissolution it is meant that the film exhibits water-solubility of at least 50%, preferably at least 75% or even at least 95%, as measured by the method set out here after using a glass-filter with a maximum pore size of 20 microns, described above.

Preferred films include those supplied by Monosol under the trade references M8630, M8900, M8779, M8310. One or more of the water-soluble films of the present disclosure can be opaque, transparent or translucent.

One or more of the films of the present disclosure may comprise an aversive agent, for example a bittering agent. Suitable bittering agents include, but are not limited to, naringin, sucrose octaacetate, quinine hydrochloride, denatonium benzoate, or mixtures thereof. Any suitable level of aversive agent may be used in the film. Suitable levels include, but are not limited to, 1 to 5000ppm, or even 100 to 2500ppm, or even 250 to 2000rpm.

Preferably, the water-soluble film or water-soluble unit dose article or both are coated in a lubricating agent, preferably, wherein the lubricating agent is selected from talc, zinc oxide, silicas, siloxanes, zeolites, silicic acid, alumina, sodium sulphate, potassium sulphate, calcium carbonate, magnesium carbonate, sodium citrate, sodium tripolyphosphate, potassium citrate, potassium tripolyphosphate, calcium stearate, zinc stearate, magnesium stearate, starch, modified starches, clay, kaolin, gypsum, cyclodextrins or mixtures thereof.

Preferably, the water-soluble film, and each individual component thereof, independently comprises between Oppm and 20ppm, preferably between Oppm and 15ppm, more preferably between Oppm and 10ppm, even more preferably between Oppm and 5ppm, even more preferably between Oppm and 1ppm, even more preferably between Oppb and 100ppb, most preferably Oppb dioxane. Those skilled in the art will be aware of known methods and techniques to determine the dioxane level within water-soluble films and ingredients thereof.

The unit dose articles can be sized and dimensioned to fit in an adult human hand. The unit dose articles can have a volume less than about 70 mL. The unit dose articles can have a volume less than about 50 mL. The unit dose articles can have a volume less than about 40 mL. The edges can have a length of from about 10 mm to about 70 mm. The edges can have a length of from about 20 mm to about 60 mm. The edges can have a length of from about 25 mm to about 50 mm.

EXAMPLES

The following are exemplary water-soluble unit dose formulations. The composition can be part of a single chamber water soluble unit dose article or can be split over multiple compartments resulting in below "averaged across compartments" full article composition. The below composition is enclosed in a polyvinyl alcohol based water soluble film, more specifically a water soluble film comprising a blend of a polyvinylalcohol homopolymer and a carboxylated anionic polyvinylalcohol copolymer, alternatively a water soluble film comprising a carboxylated anionic polyvinylalcohol copolymer such as M8630 or M8310 ex the MonoSol company.

Table 1

| ***Ingredients*** | Composition 1 (wt%) |
|---|---|
| Fatty alcohol ethoxylate non-ionic surfactant, $C_{12-14}$ average degree of ethoxylation of 7 | 3.8 |
| Lutensol XL100 | 0.5 |
| Linear $C_{11-14}$ alkylbenzene sulphonate | 24.6 |
| C12-14 AE3S Ethoxylated alkyl sulphate with an average degree of ethoxylation of 3 | 12.5 |
| Citric acid | 0.7 |
| Palm Kernel Fatty acid | 5.3 |
| Nuclease enzyme* (wt% active protein) | 0.01 |
| Protease enzyme (wt% active protein) | 0.07 |
| Amylase enzyme (wt% active protein) | 0.005 |
| Xyloglucanase enzyme (wt% active protein) | 0.005 |
| Mannanase enzyme (wt% active protein) | 0.003 |
| Ethoxylated polyethyleneimine** | 1.6 |
| Amphiphilic graft copolymer*** | 2.6 |
| Zwitterionic polyamine**** | 1.8 |
| Anionic polyester terephthalate ***** | 0.6 |
| HEDP chelant | 2.2 |
| Brightener 49 | 0.4 |
| Silicone anti-foam | 0.3 |
| Hueing dye | 0.05 |
| 1,2 PropaneDiol | 12.3 |
| Glycerine | 4.7 |
| DPG (DiPropyleneGlycol) | 1.7 |
| TPG (TriPropyleneGlycol) | 0.1 |
| Sorbitol | 0.1 |
| Monoethanolamine | 10.2 |

(continued)

| ***Ingredients*** | Composition 1 (wt%) |
|---|---|
| K2SO3 | 0.4 |
| MgCl2 | 0.3 |
| water | 10.8 |
| Hydrogenated castor oil | 0.1 |
| Perfume | 2.1 |
| Aesthetic dye & Minors | Balance to 100 |
| pH (10% product concentration in demineralized water at 20°C) | 7.4 |

*Nuclease enzyme is disclosed in co-pending European application 19219568.3

**Lutensol FP620 ex BASF - ethoxylated polyethyleneimine (PEI600 EO20)

***polyethylene glycol graft polymer comprising a polyethylene glycol backbone (Pluriol E6000) and hydrophobic vinyl acetate side chains, comprising 40% by weight of the polymer system of a polyethylene glycol backbone polymer and 60% by weight of the polymer system of the grafted vinyl acetate side chains

**** Lutensit Z96 (zwitterionic polyamine ex BASF - zwitterionic hexamethylene diamine according to below formula : 100% quaternized and about 40% of the polyethoxy (EO24) groups are sulfonated).

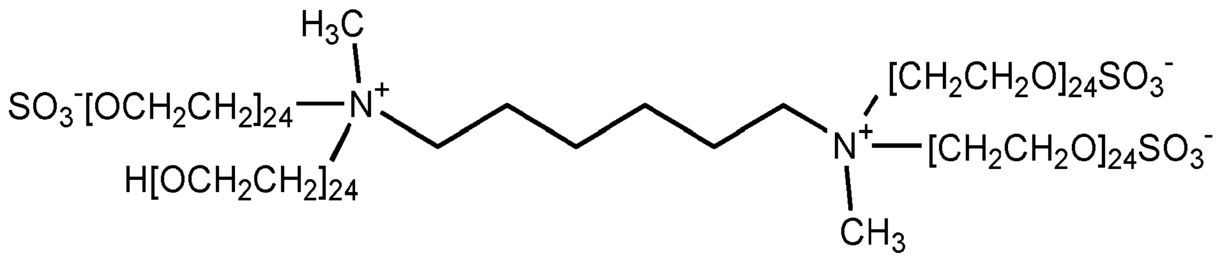

***** Texcare SRA300 ex Clariant

The following is a multi-compartment water soluble unit dose laundry article comprising a larger bottom compartment while having two smaller compartments in a side-by-side configuration superposed on top of the bottom compartment, following the Ariel™ All-in-1 Pods design, as commercially available in the UK in October 2022. The below compositions are enclosed in a polyvinyl alcohol based water soluble outer film, more specifically a water soluble film comprising a blend of a polyvinylalcohol homopolymer and a carboxylated anionic polyvinylalcohol copolymer, and a water soluble middle film comprising a blend of polyvinyl alcohol homopolymers, alternatively a blend of a polyvinylalcohol homopolymer and a carboxylated anionic polyvinylalcohol copolymer.

Table 2

| ***Ingredients*** | Full article Composition (wt%) | Bottom compartment Composition (wt%) | Top compartment Composition 1 (wt%) | Top compartment Composition 2 (wt%) |
|---|---|---|---|---|
| Volume | 25.5ml | 22.3ml | 1.6ml | 1.6ml |
| Fatty alcohol ethoxylate non-ionic surfactant, $C_{12-14}$ average degree of ethoxylation of 7 | 3.5 | 3.7 | 2.6 | 1.6 |
| Lutensol XL100 | 0.4 | 0.5 | - | - |
| Linear $C_{11-14}$ alkylbenzene sulphonate | 24.2 | 24.9 | 18.9 | 19.4 |
| C12-15 AE3S Ethoxylated alkyl sulphate with an average degree of ethoxylation of 3 | 12.3 | 12.6 | 9.7 | 9.7 |
| Citric acid | 0.7 | 0.7 | 0.5 | 0.5 |
| Palm Kernel Fatty acid | 5.2 | 5.4 | 4.1 | 4.1 |
| Nuclease enzyme* (wt% active protein) | 0.009 | 0.011 | - | - |
| Protease enzyme (wt% active protein) | 0.05 | 0.06 | - | - |
| Amylase enzyme (wt% active protein) | 0.004 | 0.005 | - | - |
| Xyloglucanase enzyme (wt% active protein) | 0.005 | - | 0.073 | - |
| Mannanase enzyme (wt% active protein) | 0.003 | 0.003 | - | - |
| Lipase enzyme (wt% active protein) | 0.012 | - | 0.187 | - |
| Ethoxylated polyethyleneimine* * | 1.5 | 1.6 | 1.2 | 1.2 |
| Amphiphilic graft copolymer*** | 2.0 | 2.3 | - | - |
| Zwitterionic polyamine**** | 1.8 | 1.9 | 1.4 | 1.4 |
| Anionic polyester terephthalate ***** | 0.4 | - | - | 5.8 |
| HEDP chelant | 2.2 | 2.2 | 1.7 | 1.7 |
| Brightener 49 | 0.3 | 0.4 | 0.01 | 0.01 |
| Silicone anti-foam | 0.3 | 0.3 | - | - |
| Hueing dye | 0.04 | - | 0.69 | - |
| 1,2 PropaneDiol | 13.6 | 12.8 | 11.3 | 26.4 |
| Glycerine | 6.0 | 5.0 | 17.3 | 8.3 |

(continued)

| ***Ingredients*** | Full article Composition (wt%) | Bottom compartment Composition (wt%) | Top compartment Composition 1 (wt%) | Top compartment Composition 2 (wt%) |
|---|---|---|---|---|
| DPG (DiPropyleneGlycol) | 0.8 | 0.8 | 0.6 | 0.6 |
| TPG (TriPropyleneGlycol) | 0.06 | 0.06 | - | - |
| Sorbitol | 0.6 | 0.05 | 8.8 | - |
| Monoethanolamine | 10.0 | 10.4 | 7.9 | 8.0 |
| K2SO3 | 0.4 | 0.4 | 0.04 | 0.4 |
| MgCl2 | 0.3 | 0.3 | 0.2 | 0.2 |
| water | 10.9 | 10.9 | 11.8 | 9.9 |
| Hydrogenated castor oil | 0.1 | 0.1 | - | 0.1 |
| Perfume | 1.6 | 1.9 | - | - |
| Aesthetic dye & Minors (incl. preservative) | Balance to 100 | Balance to 100 | Balance to 100 | Balance to 100 |
| pH (10% product concentration in demineralized water at 20°C) | 7.4 | 7.4 | 7.4 | 7.4 |

*Nuclease enzyme is as claimed in co-pending European application 19219568.3

**Lutensol FP620 ex BASF - ethoxylated polyethyleneimine (PEI600 EO20)

***polyethylene glycol graft polymer comprising a polyethylene glycol backbone (Pluriol E6000) and hydrophobic vinyl acetate side chains, comprising 40% by weight of the polymer system of a polyethylene glycol backbone polymer and 60% by weight of the polymer system of the grafted vinyl acetate side chains

**** Lutensit Z96 (zwitterionic polyamine ex BASF - zwitterionic hexamethylene diamine according to below formula: 100% quaternized and about 40% of the polyethoxy (EO24) groups are sulfonated).

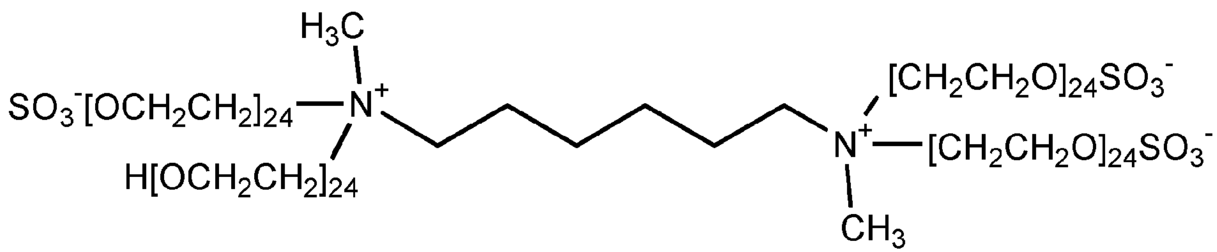

***** Texcare SRA300 ex Clariant

Contemplated Examples:

Example A: A process of making a plurality of water-soluble unit dose articles comprising the steps of: obtaining a first water-soluble film roll and unwinding the first water-soluble film roll to provide a first film web to a first forming surface, the first forming surface comprising a plurality of first molds each comprising one or more recesses therein, and wherein the first forming surface has a first velocity; tensioning the first film web and inducing a first strain therein and providing the first film web to the first forming surface; conforming the first film web to the one or more recesses thereby forming one or more cavities in the first film web; filling the one or more cavities in the first film web with one or more treatment agents; obtaining a second water-soluble film roll and unwinding the second water-soluble film roll to provide a second film web; tensioning the second film web and inducing a second strain therein, wherein the second strain is greater than the first strain; providing the second film web to the first forming surface and joining the second film web to the first film web thereby sealing the one or more cavities along peripheries thereof; and cutting joined first and second film webs along one or more of the peripheries to create a plurality of water-soluble unit dose articles.

Example A1: The process of Example A, wherein the first strain is provided to the first film web via one or more rolls at least one of which comprises a lower tangential velocity than the first velocity.

Example A2: The process of any of Examples A-A1, wherein the second strain is provided to the form conveyor via one or more rolls at least one of which comprises a lower tangential velocity than the first velocity.

Example A3: The process of any of Examples A-A2, wherein the step of conforming the first film web includes heating the first film web, wherein the first film web is heated via at least one of: heated rolls, IR emitters, and/or hot plates.

Example A4: The process of any of Examples A-A3, wherein the step of conforming the first film web comprises at least one of: applying a vacuum pressure to the first film web, applying a positive pressure to the first film web, or a combination thereof.

Example A5: The process of any of Examples A-A4, wherein the step of joining the second film web to the filled first web includes heating the second film web, wherein the second film web is heated via at least one of: heated rolls, IR emitters, or hot plates.

Example A6: The process of any of Examples A-A5, wherein each of the plurality of water-soluble unit dose articles comprises a plurality of chambers.

Example A7: The process of Example A6, wherein the plurality of chambers is arranged in a side-by-side configuration.

Example A8: The process of any of Examples A-A5, wherein cutting the combined film web along one or more peripheries results in a plurality of water-soluble unit dose articles each of which comprise a single chamber.

Example A9: The process of any of Examples A-A8, wherein the one or more treatment agents comprise at least one of a powder, a gel, a liquid, or combinations thereof.

Example A10: The process of Examples A6-A7, wherein each of the plurality of chambers comprises one or more treatment agents comprising at least one of a powder, a gel, a liquid, or combinations thereof, and wherein at least two of the plurality of chambers comprise different treatment agents.

Example A11: The process of any of Examples A-A10, wherein the step of joining the second film web to the first film web further comprises the step of wetting either the first film web and/or the second film web.

Example A12: The process of any of Examples A-A11, wherein the first forming surface is selected from at least one of a horizontal conveyor, a rotating drum, or combinations thereof.

Example A13: The process of any of Examples A-A12, wherein the process is a continuous process.

Example A14: The process of any of Examples A-A13, wherein the first strain is from about 1 percent to about 7 percent, more preferably from about 1.5 percent to about 6 percent, or most preferably from about 2 percent to about 5 percent.

Example A15: The process of any of Examples A-A14, wherein the second strain is from between about 2 percent to about 10 percent, more preferably from about 3 percent to about 9 percent, or most preferably from about 4 percent to about 8 percent.

Example A16: The process of any of Examples A-A15, wherein a difference between the first strain and the second strain is from between about 1 percent to about 9 percent, more preferably from about 1 percent to about 6 percent or most preferably from about 1 percent to about 3 percent.

Example B: A process of making water-soluble unit dose articles comprising the steps of: obtaining a first water-soluble film roll and unwinding the first water-soluble film roll to provide a first film web to a first forming surface, the first forming surface comprising a plurality of first molds each comprising one or more recesses therein, and wherein the first forming surface has a first velocity; tensioning the first film and inducing a first strain therein and providing the first film web to a first forming surface; conforming the first film web to the one or more recesses thereby forming one or more cavities in the first film web; filling the one or more cavities in the strained first film web with one or more treatment agents; obtaining a second water-soluble film roll and unwinding the second water-soluble film roll to provide a second film web; tensioning the second film web and inducing a second strain therein, wherein the second strain is greater than the first strain; obtaining a third water-soluble film roll and unwinding the third water-soluble film roll to provide a third film web; tensioning the third film web and inducing a third strain therein, and providing the third film web to a second forming surface having the first velocity, the second forming surface comprising a plurality of second molds with one or more recesses therein, and wherein the third strain is greater than the first strain; conforming the third film web to the one or more recesses in the plurality of second molds thereby forming one or more cavities in the third film web; filling the one or more cavities in the third film web with one or more treatment agents; providing the second film web to the second forming surface and joining the second film web to the third film web thereby sealing the one or more cavities in the third film web; joining the first film web to the second film web such that the second film web is disposed between the first film web and the third film web thereby sealing the one or more cavities in the first film web and forming a combined film web; and cutting the combined film web along one or more of the peripheries to create a plurality of water-soluble unit dose articles.

Example B1: The process of Example B, wherein the first strain is provided to the first film web via one or more rolls at least one of which comprises a lower tangential velocity than the first velocity.

Example B2: The process of any of Examples B-B1, wherein second strain is provided to the second forming surface via one or more rolls at least one of which comprises a lower tangential velocity than the first velocity.

Example B3: The process of any of Examples B-B2, wherein the third strain is provided to the third film web via one or more rolls at least one of which comprises a lower tangential velocity than the first velocity.

Example B4: The process of any of Examples B-B3, wherein the step of conforming the first film web includes heating the first film web via a first heat source, the first heat source comprising at least one of: heated rolls, IR emitters, and/or hot plates.

Example B5: The process of any of Examples B-B4, wherein the step of conforming the third film web includes heating the third film web via a second heat source, the second heat source comprising at least one of heated rolls, IR emitters, and/or hot plates.

Example B6: The process of Examples B4-B5, wherein the first heat source and the second heat source are different.

Example B7: The process of any of Examples B-B6, wherein each of the steps of conforming the first film web and conforming the third film web comprise at least one of: applying a vacuum pressure to the respective film web, applying a positive pressure to the respective film web, or a combination thereof.

Example B8: The process of any of Examples B-B7, wherein each of the plurality of water-soluble unit dose articles comprises a plurality of chambers, and wherein at least one of the plurality of chambers is disposed superjacent to another of the plurality of chambers.

Example B9: The process of any of Examples B-B8, wherein each of the plurality of water-soluble unit dose articles comprises a first portion and a second portion, wherein the first portion comprises part of the first film web and part of the second film web and the second portion comprises part of the third film web and part of the second film web, and wherein the first portion comprises less chambers than the second portion.

Example B10: The process of Example B9, wherein the first portion is superjacent to the second portion.

Example B11: The process of any of Examples B9-B10, wherein the first portion comprises one chamber.

Example B12: The process of any of Examples B9-B11, wherein the second portion comprises a plurality of chambers arranged in a side-by-side configuration.

Example B13: The process of any of Examples B-B12, wherein the one or more treatment agents comprise at least one of a powder, a gel, a liquid, or combinations thereof.

Example B14: The process of any of Examples B8-B12, wherein each of the plurality of chambers comprises one or more treatment agents comprising at least one of a powder, a gel, a liquid, or combinations thereof, and wherein at least two of the plurality of chambers comprise different treatment agents.

Example B15: The process of any of Examples B-B14, wherein the step of joining the second film web to the third film web comprises the step of wetting the second film web and/or the third film web.

Example B16: The process of any of Examples B-B15, wherein the step of joining the first film web to the second film web comprises the step of wetting the second film web and/or the first film web.

Example B17: The process of any of Examples B-B16, wherein the first forming surface is selected from at least one of a horizontal conveyor, a rotating drum, or combinations thereof and wherein the second forming surface is selected from at least one of: a horizontal conveyor, a rotating drum, or combinations thereof.

Example B18: The process of Example B17, wherein the first forming surface and the second forming surface are different.

Example B19: The process of any of Examples B17-B18, wherein the first forming surface comprises a horizontal conveyor and the second forming surface comprises a rotating drum.

Example B20: The process of any of Examples B-B19, wherein the process is a continuous process.

Example B21: The process of any of Examples B-B20, wherein the first strain is from about 1 percent to about 10 percent, more preferably from about 2 percent to about 9 percent, or most preferably from about 2 percent to about 8 percent.

Example B22: The process of any of Examples B-B21, wherein the second strain is from about 3 percent to about 14 percent, more preferably from about 4 percent to about 13 percent or most preferably from about 5 percent to about 12 percent.

Example B23: The process of any of Examples B-B22, wherein the third strain is from about 3 percent to about 16 percent, more preferably from about 4 percent to about 15 percent, or most preferably from about 5 percent to about 14 percent.

Example B24: The process of any of Examples B-B23, wherein a difference between the first strain and the second strain is from between about 2 percent to about 13 percent, more preferably from about 4 percent to about 12 percent, or most preferably from about 5 percent to about 11 percent.

Example B25: The process of any of Examples A-A16 and B-B24, wherein each of the plurality of said water-soluble unit dose articles comprises a plurality of printed characters or an aversive agent having a foul taste.

Example B26: The process of any of Examples A-A16 and B-B25, wherein the first velocity is from between about 2 m/min to about 20 m/min, more preferably from about 5 m/min to about 20 m/min.

Example B27. The process of any of Examples A-A16 and B-B26, wherein the first water-soluble film, the second water-soluble film and the third water soluble film, if present, comprise a polyvinylalcohol homopolymer, a polyvinylalcohol copolymer, or a blend thereof, preferably an anionic polyvinylalcohol copolymer or a blend of polyvinylalcohol homopolymers and/or anionic polyvinylalcohol copolymers, more preferably wherein the polyvinylalcohol copolymers are selected from sulphonated and carboxylated anionic polyvinylalcohol copolymers especially carboxylated anionic polyvinylalcohol copolymers, most preferably the water-soluble film comprises a carboxylated anionic polyvinylalcohol copolymer, or a blend of a polyvinylalcohol homopolymer and a carboxylated anionic polyvinylalcohol copolymer, or a blend of polyvinylalcohol homopolymers.

The dimensions and values disclosed herein are not to be understood as being strictly limited to the exact numerical values recited. Instead, unless otherwise specified, each such dimension is intended to mean both the recited value and a functionally equivalent range surrounding that value. For example, a dimension disclosed as "40 mm" is intended to mean "about 40 mm."

Every document cited herein, including any cross referenced or related patent or application and any patent application or patent to which this application claims priority or benefit thereof, is hereby incorporated herein by reference in its entirety unless expressly excluded or otherwise limited. The citation of any document is not an admission that it is prior art with respect to any invention disclosed or claimed herein or that it alone, or in any combination with any other reference or references, teaches, suggests or discloses any such invention. Further, to the extent that any meaning or definition of a term in this document conflicts with any meaning or definition of the same term in a document incorporated by reference, the meaning or definition assigned to that term in this document shall govern.

While particular embodiments of the present invention have been illustrated and described, it would be obvious to those skilled in the art that various other changes and modifications can be made without departing from the spirit and scope of the invention. It is therefore intended to cover in the appended claims all such changes and modifications that are within the scope of this invention.

## Claims

1. A process of making a plurality of water-soluble unit dose articles comprising the steps of:

    obtaining a first water-soluble film roll and unwinding the first water-soluble film roll to provide a first film web to a first forming surface, the first forming surface comprising a plurality of first molds each comprising one or more recesses therein, and wherein the first forming surface has a first velocity;
    tensioning the first film web and inducing a first strain therein and providing the first film web to the first forming surface;
    conforming the first film web to the one or more recesses thereby forming one or more cavities in the first film web;
    filling the one or more cavities in the first film web with one or more treatment agents;
    obtaining a second water-soluble film roll and unwinding the second water-soluble film roll to provide a second film web;
    tensioning the second film web and inducing a second strain therein, wherein the second strain is greater than the first strain;
    providing the second film web to the first forming surface and joining the second film web to the first film web thereby sealing the one or more cavities along peripheries thereof; and
    cutting joined first and second film webs along one or more of the peripheries to create a plurality of water-soluble unit dose articles.

2. The process of Claim 1, wherein the first strain is provided to the first film web via one or more rolls at least one of which comprises a lower tangential velocity than the first velocity.

3. The process of Claim 1 or 2, wherein the second strain is provided to the second film web via one or more rolls at least one of which comprises a lower tangential velocity than the first velocity.

4. The process of any of Claims 1 to 3, wherein the step of conforming the first film web includes heating the first film web, wherein the first film web is heated via at least one of:
    heated rolls, IR emitters, and/or hot plates.

5. The process of any of Claims 1 to 4, wherein the step of conforming the first film web comprises at least one of: applying a vacuum pressure to the first film web, applying a positive pressure to the first film web, or a combination

thereof.

6. The process of any of Claims 1 to 5, wherein the step of joining the second film web to the filled first web includes heating the second film web, wherein the second film web is heated via at least one of: heated rolls, IR emitters, or hot plates.

7. The process of any of Claims 1 to 6, wherein each of the plurality of water-soluble unit dose articles comprises a plurality of chambers.

8. The process of Claim 7, wherein the plurality of chambers is arranged in a side-by-side configuration.

9. The process of any of Claims 1 to 8, wherein cutting the combined film web along one or more peripheries results in a plurality of water-soluble unit dose articles each of which comprise a single chamber.

10. The process of any of Claims 1 to 9, wherein the step of joining the second film web to the first film web further comprises the step of wetting either the first film web and/or the second film web.

11. The process of any of Claims 1 to 10, wherein the first forming surface is selected from at least one of a horizontal conveyor, a rotating drum, or combinations thereof.

12. The process of any of Claims 1 to 11, wherein the process is a continuous process.

13. The process of any of Claims 1 to 12, wherein the first strain is from about 1 percent to about 7 percent.

14. The process of any of Claims 1 to 13, wherein the second strain is from between about 2 percent to about 10 percent.

15. The process of any of Claims 1 to 14, wherein a difference between the first strain and the second strain is from between about 1 percent to about 9 percent.

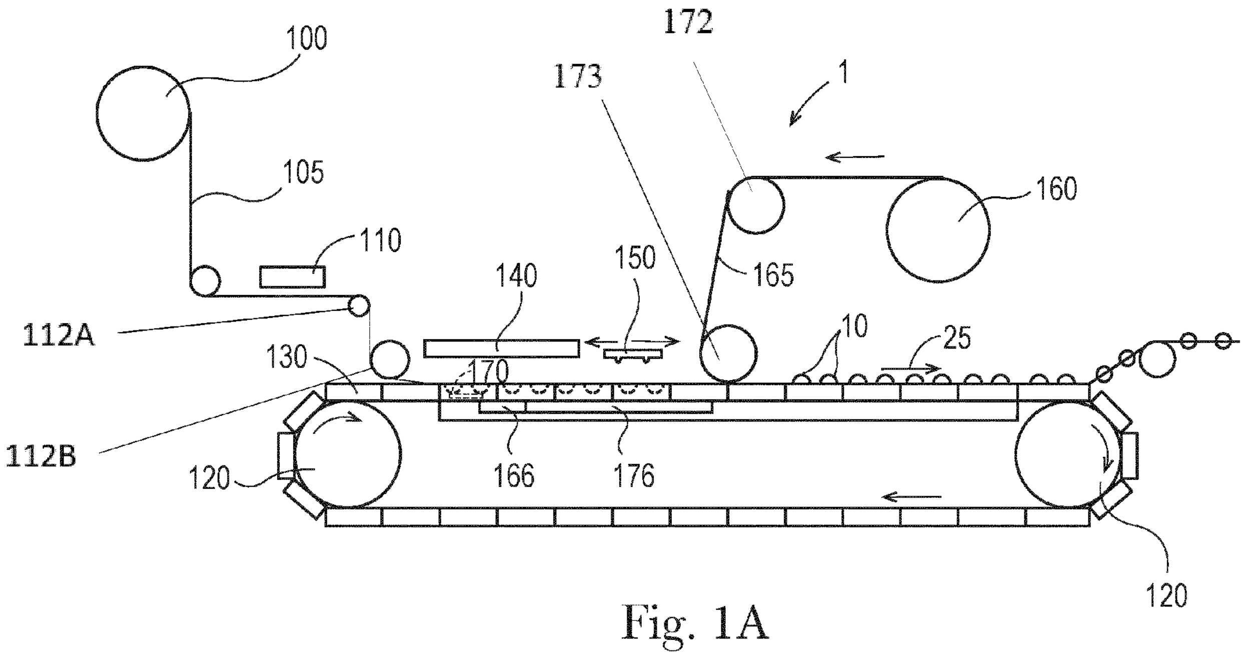
100
105
110
112A
112B
130
140
150
170
172
173
1
160
165
10
25
120
166
176
120

Fig. 1A

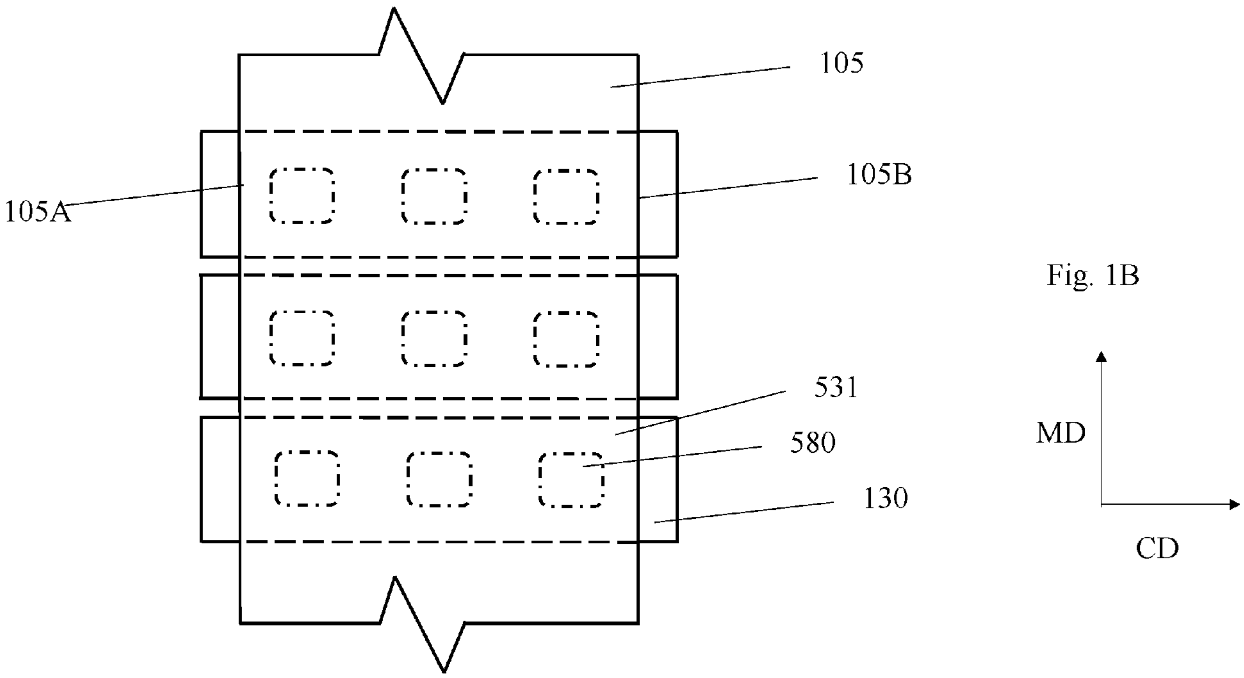


Fig. 1B

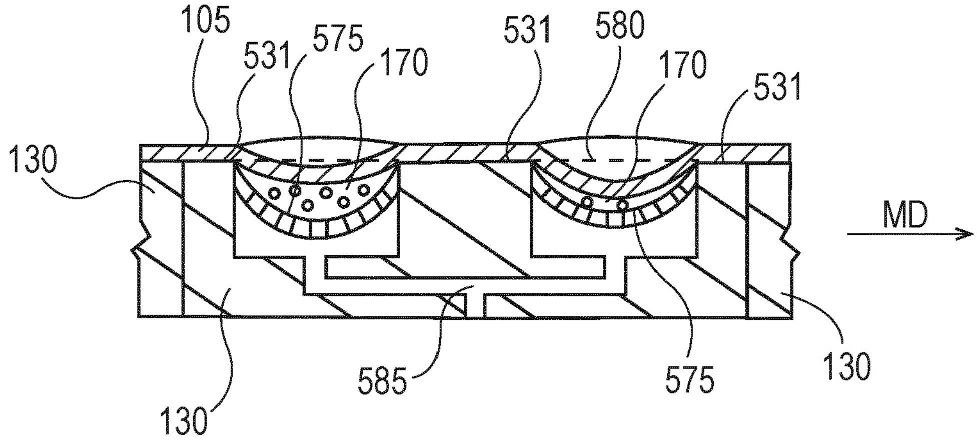


Fig. 1C

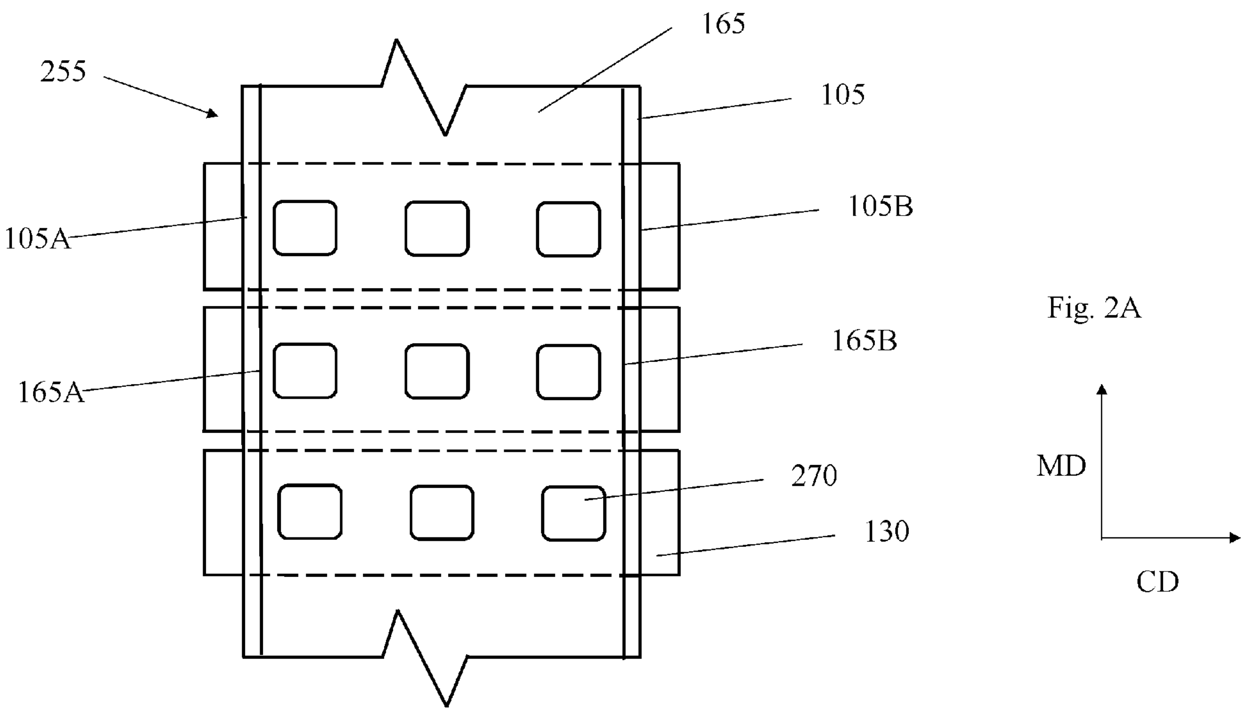


Fig. 2A

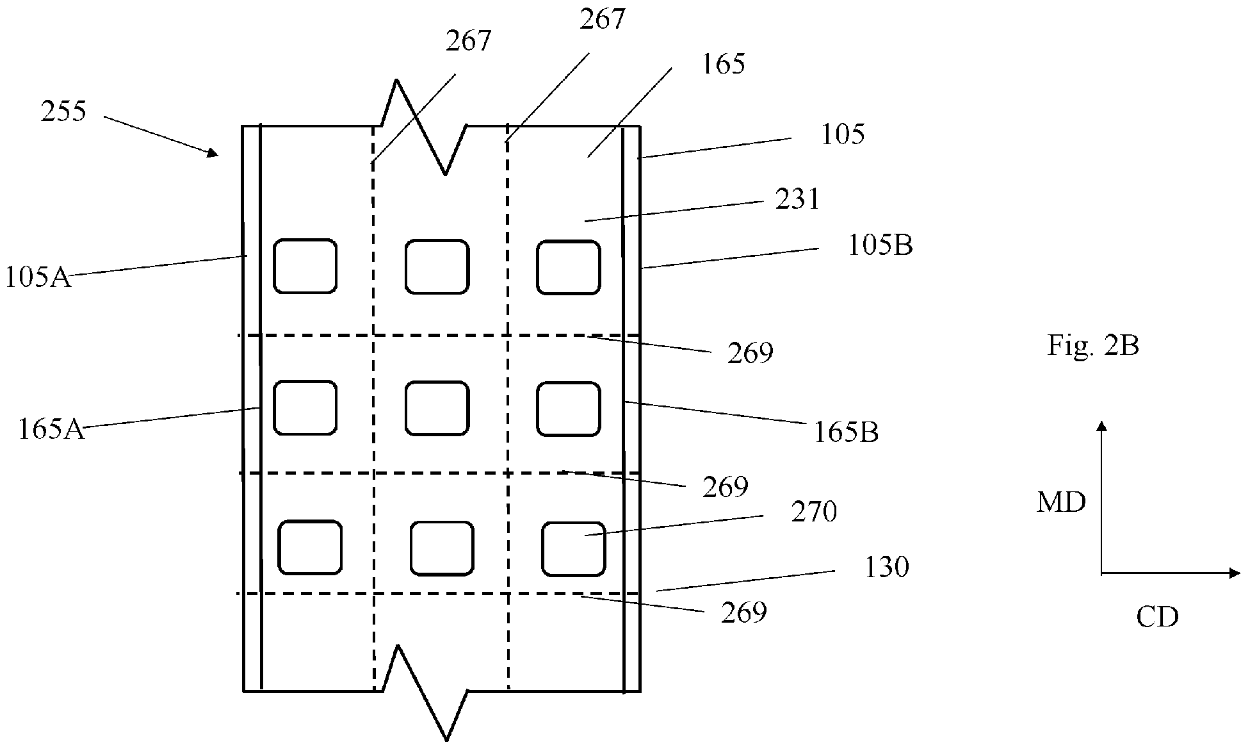
255
267
267
165
105
231
105A
105B
269
165A
165B
269
270
130
269
MD
CD

Fig. 2B

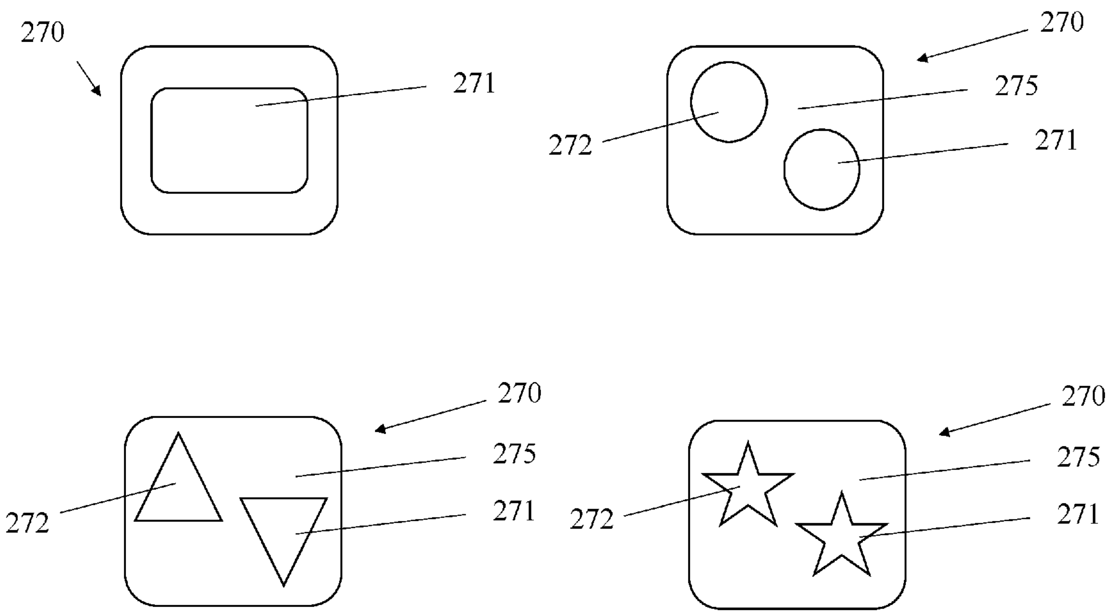


Fig. 2C

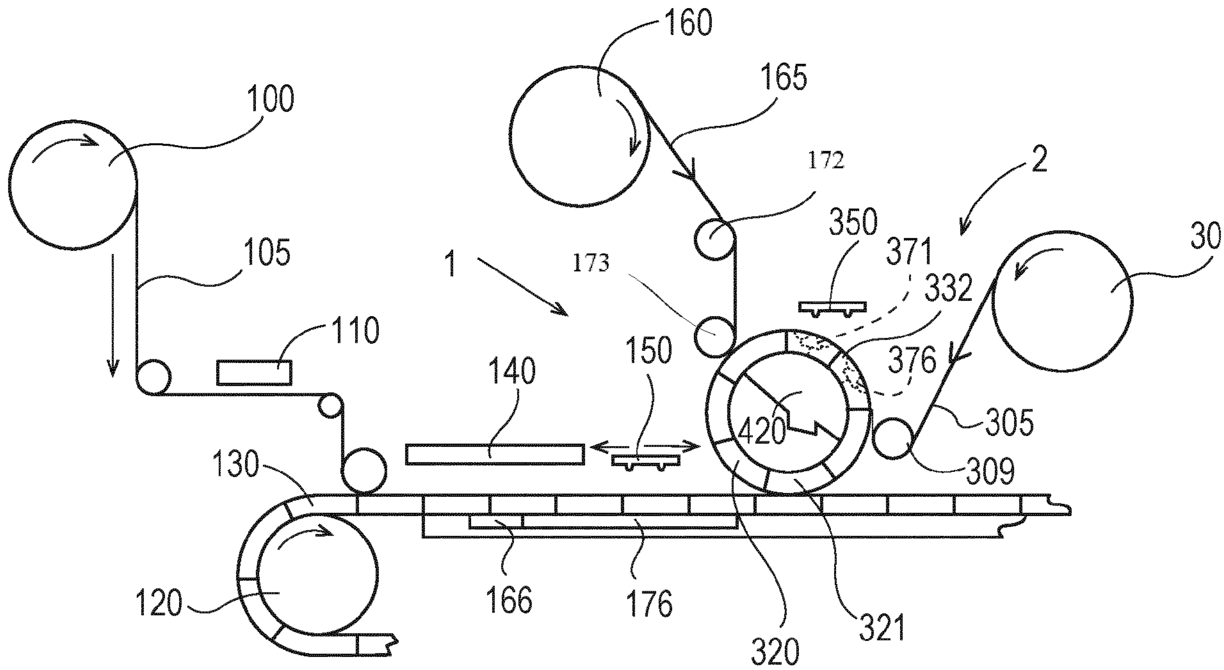
160
165
100
172
2
350
371
300
105
1
173
332
110
376
140
150
420
305
130
309
120
166
176
320
321

Fig. 3

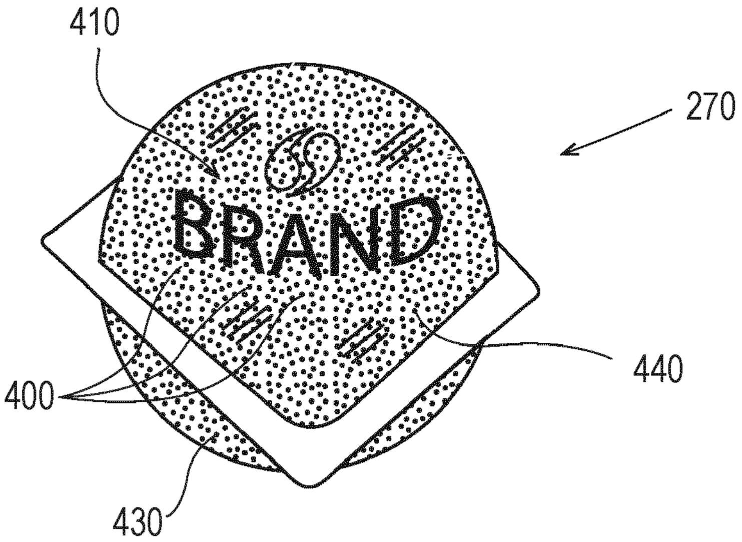


Fig. 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 20220025303 A
- US 6989072 B
- EP 3323740 B1
- EP 1406953 A
- WO 03008180 A
- WO 2005121225 A
- WO 2004009335 A
- WO 2014197415 A
- EP 19219568